(19) **Europäisches Patentamt European Patent Office Office européen des brevets**

(11) **EP 2 442 585 B1**

(12) **EUROPEAN PATENT SPECIFICATION**

(45) Date of publication and mention of the grant of the patent:
**27.09.2017 Bulletin 2017/39**

(51) Int Cl.:
*H04Q 9/00* *(2006.01)*

(21) Application number: **11184236.5**

(22) Date of filing: **06.10.2011**

(54) **METHOD FOR TRANSMITTING NUMERIC VALUES FROM A DETECTION UNIT TO A CONTROL UNIT**

VERFAHREN ZUM ÜBERTRAGEN NUMERISCHER WERTE VON EINER ERFASSUNGSEINHEIT AN EINE STEUEREINHEIT

PROCÉDÉ DE TRANSMISSION DE VALEURS NUMÉRIQUES D'UNE UNITÉ DE DÉTECTION VERS UNE UNITÉ DE CONTRÔLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2010 IT TO20100828**

(43) Date of publication of application:
**18.04.2012 Bulletin 2012/16**

(73) Proprietor: **LEONARDO S.p.A.**
**00195 Roma (IT)**

(72) Inventors:
• **CATANIA, Girolamo**
**95041 Caltagirone (IT)**
• **GALIZIA, Giovanni**
**95032 Belpasso (IT)**

(74) Representative: **Bergadano, Mirko et al**
**Studio Torta S.p.A.**
**Via Viotti, 9**
**10121 Torino (IT)**

(56) References cited:
**US-A- 5 347 540    US-A1- 2010 023 304**
**US-B1- 6 487 695**

## Description

The present invention regards a method for transmitting numeric values from a detection unit to a control unit.

As is known, particularly widespread today are detection systems, which each comprise a plurality of detection units and at least one control unit, typically set at distance from the detection units. Each detection unit comprises a respective processing unit and one or more sensors, which are connected to the processing unit and detect the evolution in time of respective quantities, which in what follows will be referred to as "parameters". The evolutions detected are then communicated by the detection units to the control unit, which supervises the operations performed by the detection units and can carry out specific actions on the basis of the evolutions detected.

In detail, considering for simplicity of description a detection system formed by a single detection unit comprising a single sensor, the respective processing unit acquires and stores numeric values corresponding to the parameter monitored by the sensor. Assuming that the individual sensor supplies a signal (not necessarily an analog signal) indicating the numeric values assumed in time by the parameter, said numeric values can be acquired in a periodic (synchronous) way, for example by sampling the signal supplied by the sensor or else by querying the sensor, as is frequently the case of sensors of a digital type. The numeric values can moreover be acquired in an asynchronous way; in this case, typically it is the sensor itself that notifies to the processing unit variations of the parameter, as soon as it is detected.

Irrespective of how the numeric values are acquired, the detection unit transmits to the control unit the numeric values acquired thereby in such a way as to make them available to the control unit itself. Transmission of the numeric values acquired may prove burdensome; in fact, the numeric values are acquired by the processing unit in a format that is proper to the sensor itself. For example, in the case where the sensor is of a digital type and supplies numeric values expressed in a certain format, understood as number of bits and type of coding (for example, floating-point coding), the processing unit acquires numeric values in that given format. Consequently, according to the precision of the sensor, it may be necessary to transmit, for each numeric value, a high number of bits, with consequent increase of the traffic exchanged within the detection system.

In the case of a simplified system comprising a single detection unit, the transmission, for each numeric value, of a high number of bits entails a loss of efficiency. In addition, as the number of detection units increases, such a transmission of numeric values may prove problematical, in particular in the case of detection systems in which the detection units communicate with the control unit by means of communication channels with low bit rate, i.e., with a bit rate lower than 256 Kbit/s.

In particular, transmission of numeric values may prove problematical in the case where the control unit and the detection units communicate with one another by using switched channels, i.e., in the case where the communications between the control unit and each detection unit occurs after prior dynamic setting-up of a respective communication channel of a point-to-point type. In fact, in this case it happens that, on account of the low bit rate, the transmission of a generic numeric value by a generic detection unit requires a respective connection time during which the generic detection unit must remain connected to the control unit by means of a respective switched channel. During the connection time, which has a non-negligible duration, the control unit cannot connect up to any other detection unit, with consequent delay in the transmission of numeric values acquired by other detection units, or even loss of said numeric values.

In the contexts described above, there is hence felt the need to limit the traffic transmitted by the detection units to the control unit for transmission of the numeric values acquired by the respective processing units.

Document US6487695 discloses a fail-safe system to connect a mobile input unit with a machine control unit, implementing a redundant preprocessing of the user inputs in the mobile input unit. The signals from the input means are routed to two processors of the input unit, and both processors encode the user inputs before transmitting the signals to the control unit. In the control unit, the received and encoded user inputs are decoded by two processors and subsequently compared to one another for concordance. When concordance is given, the received data is further processed in the control. If there is no concordance, an error routine is executed, shutting down the machine tool.

The aim of the present invention is to provide a method for transmitting numeric values that will solve at least in part the drawbacks of the known art.

According to the present invention, a method for transmitting numeric values, a detection unit, and a sensor unit are provided, as defined, respectively, in Claims 1, 13 and 14.

For a better understanding of the invention, embodiments thereof are now described, purely by way of non-limiting example and with reference to the attached drawings, wherein:

- Figure 1 is a schematic illustration of a detection system;
- Figures 2, 3, 5, 6, 8, 9, 11 and 14 show flowcharts of operations according to the present method;
- Figures 4, 7, 10 and 12 show schematically structures provided according to the present invention; and
- Figure 13 shows in hexadecimal format a binary data string.

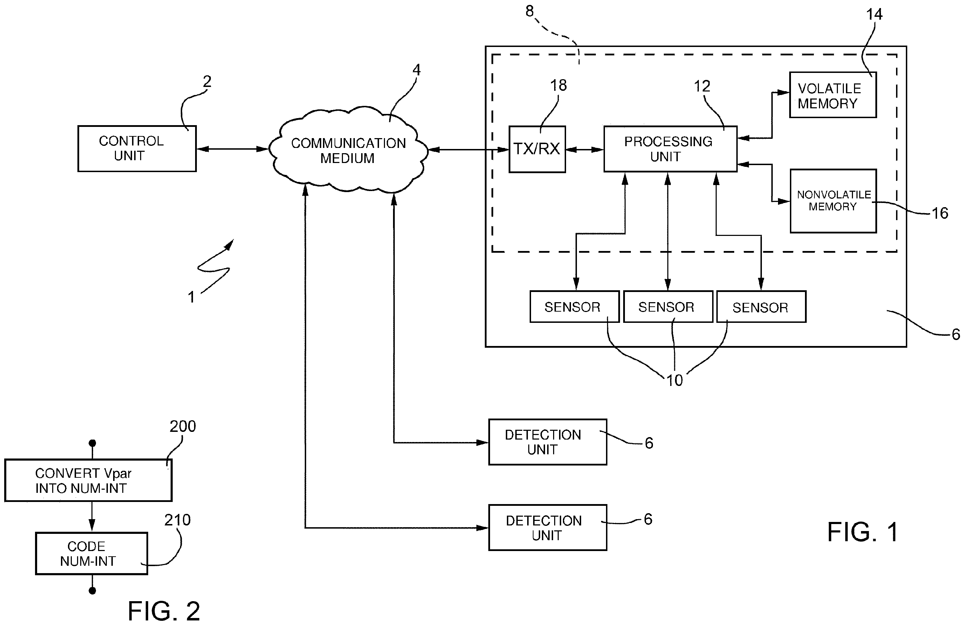

Figure 1 shows a detection system 1, which comprises a control unit 2, a communication medium 4, and a plurality of detection units 6, which are not necessarily the same as one another and are connected to the control unit 2 by means of the communication medium 4. In particular, Figure 1 shows, by way purely of example, three detection units 6. Moreover, once again by way of example, just one of the three detection units illustrated is shown in greater detail.

The detection unit 6 and the control unit 2 are synchronized with respect to one and the same system clock. Moreover, each detection unit 6 comprises a respective peripheral electronic device 8 and a plurality of sensor apparatuses 10, connected to the peripheral electronic device 8. By way of example, Figure 1 shows three sensor apparatuses 10. Even though it is not shown, each detection unit 6 can have a different number of sensor apparatuses 10.

In turn, each peripheral electronic device 8 comprises a processing unit 12, a volatile memory 14, a non-volatile memory 16, and a transceiver module 18. The volatile memory 14, the non-volatile memory 16, and the transceiver module 18, as likewise the sensor apparatuses 10, are connected to the processing unit 12.

Operatively, the control unit 2 is able to connect selectively to each detection unit 6, setting up a respective communication channel on the communication medium 4. For example, the communication medium 4 may merely be the free space present between the control unit 2 and the detection units 6, or else may be formed by connections of conductor material. In the latter case, the communication medium 4 is of a wired type. In addition, in a given instant in time, the control unit 2 is able to communicate with just one detection unit 6, which, in a way in itself known, can communicate with the control unit 2 through its own transceiver module 18.

Operatively, each sensor apparatus 10 monitors a corresponding parameter and supplies to the processing unit 12 to which it is connected a respective signal, whether analog or digital, indicating the corresponding parameter monitored. In greater detail, considering a generic sensor apparatus 10 from among the sensor apparatuses 10 of a generic detection unit 6, it co-operates with the processing unit 12 of the detection unit 6 to which it belongs in such a way that said processing unit 12 will acquire in a synchronous and/or asynchronous way numeric values corresponding to the parameter monitored by the sensor apparatus considered 10. In a way in itself known, the acquisition of a numeric value X can be performed, for example:

i) in a synchronous way, by periodic querying with a sampling period T (described hereinafter) of the sensor apparatus considered 10, on the part of the processing unit 12 connected to the sensor apparatus considered 10, and consequent communication of the numeric value X on the part of the sensor apparatus considered 10; and/or
ii) in an asynchronous way, by communication of the numeric value X on the part of the sensor apparatus considered 10, following upon a detection of a variation of the corresponding parameter on the part of the sensor apparatus considered 10 itself.

In practice, in the case where the numeric value X is acquired according to ii), the acquisition is performed in a way not correlated to any periodic querying of the sensor apparatus considered 10 by the processing unit 12 connected thereto.

In what follows, it will be assumed that the asynchronous acquisitions have a temporal discretization at the most equal to $\Delta_t$, i.e., that the minimum distance in time between two asynchronous acquisitions is equal to $\Delta_t$.

In greater detail, the sensor apparatus considered 10 co-operates with the processing unit 12 to which it is connected in such a way that the processing unit 12 acquires the numeric value X in a coding format that is proper to the sensor apparatus considered 10 (for example, floating-point format on a certain number of bits), or in any case to an electronic coupling (for example, by means of analog channel and an analog-to-digital converter) present between the processing unit 12 and the sensor apparatus considered 10, irrespective of whether the acquisition is performed in the synchronous way i) or else in the asynchronous way ii). In what follows said coding format will be referred to as "original format".

Once acquired, the numeric value X is associated by the aforementioned processing unit 12 to a corresponding acquisition instant, as well as, as described hereinafter, to a corresponding acquisition mode, alternatively synchronous or asynchronous, according to how the numeric value X has been acquired.

This being said, for reasons of simplicity and without this implying any loss of generality, in what follows the present method is described with reference to a simplified situation in which the detection system 1 comprises a single detection unit, which will be referred to as "detection unit 6". In addition, it is assumed that the detection unit 6 comprises just one sensor apparatus, which will be referred to as "sensor apparatus 10". With said simplifying hypotheses, the numeric values refer to a single parameter. The ensuing description can in any case be generalized to a detection system that comprises any number of detection units, each of which in turn comprises any number of sensor apparatuses.

In what follows it is moreover assumed that the parameter, in addition to being expressable in a numeric format, has a dynamics comprised between a respective minimum value Vmin and a respective maximum value Vmax, and has a discretization step Step. The minimum value Vmin, the maximum value Vmax, and the discretization step Step are characteristic of the sensor apparatus 10 and are known both to the processing unit 12 and to the control unit 2. In particular, the discretization step Step of the parameter depends upon the precision of the sensor apparatus 10 and coincides with the minimum variation of the parameter that can be detected by the sensor apparatus 10, and hence with the minimum non-zero difference possible between two numeric values acquired by means of the sensor apparatus 10.

Operatively, the processing unit 12 is moreover able to execute, on each numeric value acquired, a number N (with N≥2) of coding algorithms, of a type in itself known, which supply N corresponding coded integer numbers, each of which is formed by an integer multiple of bytes.

For example, in the case where N=2, the processing unit 12 is able to execute a first coding algorithm and a second coding algorithm, which supply, starting from one and the same numeric value acquired, a first coded integer number and a second coded integer number, which are formed by a first number of bytes and a second number of bytes, respectively. As clarified hereinafter by means of examples, the first and second numbers of bytes can depend not only upon the first and second coding algorithms, but also upon the nature of the parameter, there being understood by "nature of the parameter" the dynamics of the parameter and/or the discretization step Step of the parameter itself.

As shown in greater detail in Figure 2, if we designate by Vpar a generic numeric value of the parameter, the coding algorithms envisage converting (block 200) the numeric value Vpar into an integer number NUM-INT, whether positive or negative, and then coding (block 210) the integer number NUM-INT on a respective local number of bytes to obtain a corresponding coded integer number NUM-BIT.

In coding the integer number NUM-INT, it is possible that one or more coding algorithms generate a so-called exception. In the absence of exceptions (described hereinafter), all the coding algorithms envisage coding the integer number NUM-INT on one and the same theoretical number of bytes in such a way that the local number of bytes coincides with the theoretical number of bytes. Alternatively, in the presence of exceptions, it is possible that the local number of bytes is different from the theoretical number of bytes, as described hereinafter by means of examples.

In addition, it is possible to discern between so-called coding algorithms of class a) and coding algorithms of class b), on the basis of whether the results of the respective steps of conversion of the numeric value Vpar into an integer number NUM-INT, and hence the integer numbers NUM-INT themselves supplied thereby, a) can only be positive, or else b) can be both positive and negative.

In greater detail, in the case of the coding algorithms of class a), the integer number NUM-INT is coded according to a coding A, which is a standard binary coding of positive integer numbers (whereby, for example, on eight bit two hundred and fifty-six different positive integer numbers can be coded), modified in such a way that it is forbidden to use, for the purposes of coding, strings of bits the bits of the most significant nibble of which are all equal to "1".

Instead, in the case of the coding algorithms of class b), the integer number NUM-INT is coded according to a coding B, which is implemented according to the following rules:

- the most significant bit of the most significant byte of the coded integer number NUM-BIT is set to "0" if the integer number NUM-INT is positive or zero, and to "1" if the integer number NUM-INT is negative;
- the three least significant bits of the most significant nibble of the coded integer number NUM-BIT cannot be all equal to "1", for reasons that will be clarified hereinafter.

In practice, if we assume that the theoretical number of bytes is equal to one, the coding algorithms of class a) can code, i.e., discriminate, up to two hundred and forty different integer numbers, which correspond to two hundred and forty different numeric values, whereas the coding algorithms of class b) can code up to one hundred and twelve different positive integer numbers and as many negative integer numbers, for a total of two hundred and twenty-three different numeric values. In addition, by preventing generation of coded integer numbers with most significant nibble equal to "1111", there remain available sixteen different escape values, which are coded on one byte and can be expressed in hexadecimal notation as "0xFw" with $0 \leq w \leq F$. The escape values are known to the control unit 2.

Described in what follows are some examples of possible coding algorithms, provided purely by way of non-limiting illustration. In addition, in what follows, for reasons of brevity, the coded integer numbers NUM-BIT supplied by the coding algorithms will be referred to as "codes".

In detail, a first coding algorithm, which in what follows will be referred to as "minimum-value algorithm", envisages, given the numeric value Vpar, setting the corresponding integer number NUM-INT equal to (Vpar-Vmin)/Step, i.e., equal to the number of discretization steps to be added to the minimum value Vmin to obtain the numeric value Vpar. Said integer number NUM-INT can be positive or zero; hence the corresponding code NUM-BIT is obtained by coding the integer number NUM-INT on the theoretical number of bytes, according to the aforementioned coding A.

In reception, the control unit 2 can determine again the numeric value Vpar. For this purpose, the control unit 2 decodes the code NUM-BIT to obtain the integer number NUM-INT, and then calculates Vpar=Vmin+Num*Step. The minimum-value algorithm does not envisage the possibility of generating exceptions.

A second coding algorithm, which in what follows will be referred to as "differential algorithm", envisages determining the integer number NUM-INT corresponding to the numeric value Vpar as a function of the numeric value acquired immediately before the numeric value Vpar, designated in what follows as Vpar_prec. In detail, the differential algorithm envisages, given the numeric value Vpar, setting the corresponding integer number NUM-INT equal to (Vpar-Vpar_prec)/Step. Said integer number NUM-INT can be either negative or positive, and consequently the code NUM-BIT corresponding to the numeric value Vpar is obtained by coding the integer number NUM-INT on the theoretical number of bytes (but for exceptions), according to the aforementioned coding B.

The differential algorithm envisages the possibility of generating exceptions. In particular, in the case where the numeric value Vpar_prec does not exist, for example because the numeric value Vpar is the first numeric value that is acquired by the processing unit 12, an exception is generated. In this case, the numeric value Vpar is coded using an alternative algorithm, known beforehand to the processing unit 12 and to the control unit 2, such as, for example, the minimum-value algorithm described previously. In particular, in the case of an exception, the code NUM-BIT is set equal to a binary sequence that can be expressed in hexadecimal notation as "0xFBwwxxFF", not necessarily formed by the theoretical number of bytes. In detail, "FB" is one of the aforementioned escape values; "ww" identifies the alternative algorithm; "xx" is the code NUM_BIT as can be obtained by applying the alternative algorithm to the integer number NUM-INT corresponding to the numeric value Vpar (in the case in point, it is assumed that the theoretical number of bytes is equal to one); and "FF" is a further escape value.

In reception, the control unit 2 can determine again the numeric value Vpar. For this purpose, the control unit 2 decodes the code NUM-BIT to obtain the integer number NUM-INT, and then calculates Vpar=Vpar_prec+Num*Step.

A third coding algorithm, which in what follows will be referred to as "nominal-value algorithm", envisages determining the integer number NUM-INT corresponding to the numeric value Vpar as a function of a reference value Vrif, which can be comprised between the minimum value Vmin and the maximum value Vmax, and can be equal to the numeric value that is statistically most probable for the parameter. Moreover, the reference value Vrif is known to the control unit 2.

In detail, the nominal-value algorithm envisages, given the numeric value Vpar, setting the corresponding integer number NUM-INT equal to (Vpar-Vrif)/Step, i.e., equal to the number of discretization steps to be added to or subtracted from the reference value Vrif to obtain the numeric value Vpar. Said integer number NUM-INT can be positive or negative; hence, the corresponding code NUM-BIT is obtained by coding the integer number NUM-BIT on the theoretical number of bytes, according to the aforementioned coding B. The nominal-value algorithm does not envisage the possibility of generating exceptions.

In reception, the control unit 2 can determine once again the numeric value Vpar. For this purpose, the control unit 2 decodes the code NUM-BIT to obtain the integer number NUM-INT, and then calculates Vpar=Vrif+Num*Step.

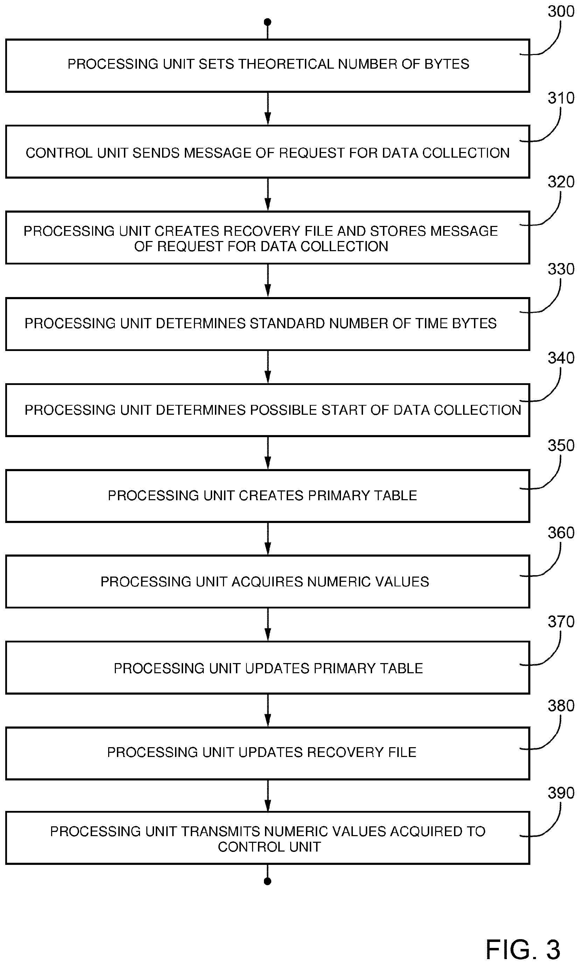

All this being said, in order to enable transmission of the numeric values acquired by the processing unit 12 to the control unit 2, the operations shown in Figure 3 are carried out.

In detail, initially the processing unit 12 sets (block 300) the aforementioned theoretical number of bytes. In particular, the theoretical number of bytes can be determined as a function of a number D of possible numeric values that the parameter can assume, said number D being equal to (Vmax-Vmin)/Step. In practice, the theoretical number of bytes is at least equal to the minimum number of bytes sufficient for coding the number D on the basis of the aforementioned coding A.

Next, the control unit 2 sends (block 310) to the detection unit 6, for example in a periodic way, a message of request for data collection for the parameter monitored by the sensor apparatus 10.

In general, i.e., with reference to the case where there are a number of detection units, a number of sensors apparatuses, and more than one parameter, the message of request for data collection contains:

- a detection-unit identifier (optional, in the case of a single detection unit), which identifies a corresponding detection unit;
- an apparatus identifier (optional, in the case of a single sensor apparatus), which identifies a corresponding sensor apparatus;
- a parameter identifier (optional, in the case of a single parameter), which identifies a corresponding parameter;
- a session identifier, which identifies the message of request for data collection itself, or rather a corresponding data-collection session, initiated by said message of request for data collection;
- an observation period, defined by a date/time of start, which will be referred to hereinafter as "START", and a date/time of end; and
- a sampling period T.

Once again with reference to the simplified situation, upon reception of the message of request for data collection, the processing unit 12 creates (block 320) in the non-volatile memory 16 a corresponding recovery file, for example of the so-called "Extensible Markup Language" (XML) type, in which it stores the message of request for data collection.

Next, the processing unit 12 determines a standard number of time bytes (block 330), which is at least equal to the number of bytes necessary for coding (for example, according to the aforementioned coding A) a positive integer number equal to the ratio between the sampling period T and the temporal discretization $\Delta_t$. For

example, in the case where T=1 minute and $\Delta_t$=1 second, the aforementioned positive integer number is equal to sixty; hence, the standard number of time bytes is equal to one.

In addition, the processing unit 12 determines (block 340) periodically whether it is necessary to start a data collection. In this regard, it should be noted that the operations of block 340 are shown, for reasons of simplicity, as successive with respect to the operations of blocks 300-330, even though they are carried out by the processing unit 12 in a way independent of the operations of blocks 300-330.

In detail, in order to determine the possible start of a data collection, the processing unit 12 checks periodically whether any messages of request for data collection are stored in the non-volatile memory 16. In the case where at least one message of request for data collection is stored, the processing unit 12, which is provided with a respective system clock, compares its own system clock with the dates/times of start contained in the messages of request for data collection stored, starting a corresponding data collection for each of the messages of request for data collection stored, the respective date/time of start of which is equal to the sum of the date/time of start and of an arbitrary guard time. In practice, the processing unit 12 can manage multiple data collections also in a concurrent way, i.e., in a way totally or partially overlapping in time. As described hereinafter, in general each data collection regards a corresponding parameter and entails management, on the part of the processing unit 12, of respective data structures (tables). In addition, in the case of concurrent data collections, the data structures of each single data collection are independent of the data structures of the other data collections. The ensuing description refers, for simplicity, to the case of a single data collection.

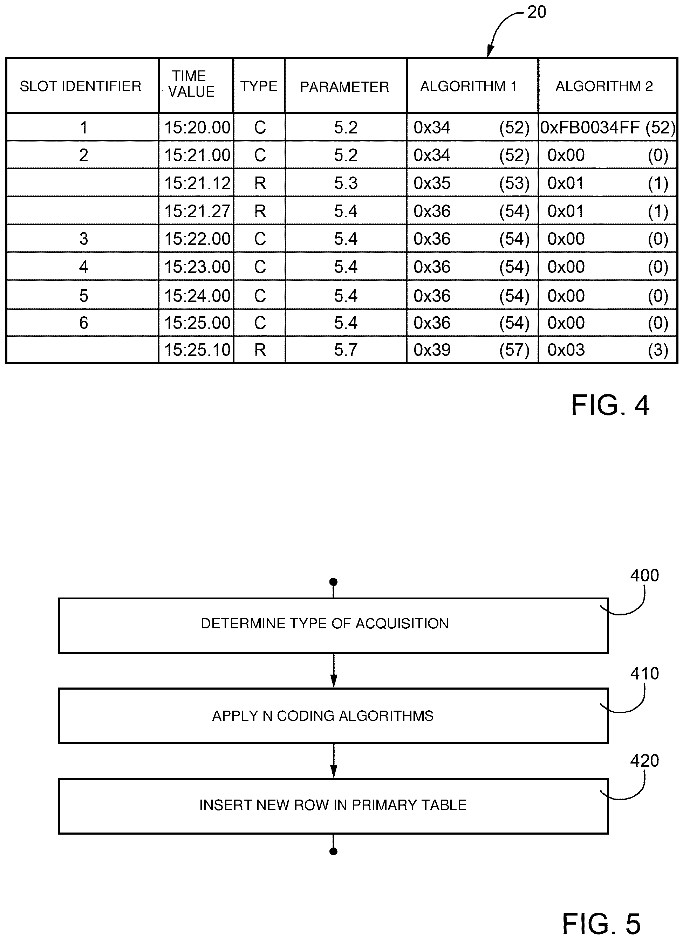

In the case where the processing unit 12 determines that it is necessary to start a data collection, it creates (block 350) within the volatile memory 14 a primary table 20 (Figure 4), which is initially empty. The primary table 20 is formed by a number N+4 of columns, as described hereinafter, and remains stored in the volatile memory 14 for the entire duration of the data collection.

Next, after waiting up to START, the processing unit 12 acquires (block 360) numeric values and updates (block 370) the primary table 20 at each acquisition of a new numeric value. In particular, the processing unit 12 acquires numeric values both in a synchronous way with a period equal to the sampling period T and (possibly) in an asynchronous way.

As shown in detail in Figure 5, in order to update the primary table 20 following upon acquisition, in an instant t0, of a numeric value Y, the processing unit 12 determines (block 400) whether the numeric value Y has been acquired in a synchronous or asynchronous way, and then applies (block 410) the N coding algorithms to the numeric value Y to obtain N corresponding codes NUM-BIT.

Next, the processing unit 12 inserts (block 420), in the primary table 20, a new row, which corresponds to the numeric value Y.

In the case where the numeric value Y has been acquired in a synchronous way, the N+4 elements of the row inserted contain, respectively:

- a time-interval identifier, which is of a progressive type and which will be referred to as "slot identifier";
- a time value equal to t0;
- an indication of type, alternatively indicating a synchronous acquisition, in the case where the numeric value Y has been acquired in a synchronous way, or else an asynchronous acquisition, in the case where the numeric value Y has been acquired in an asynchronous way;
- a parameter value, equal to the numeric value Y and coded according to the original format; and
- the N codes NUM-BIT corresponding to the numeric value Y, obtained by applying the N coding algorithms.

Instead, in the case where the numeric value Y has been acquired in an asynchronous way, the N+4 elements of the row inserted are equal to those described for the case of synchronous acquisition, but for the slot identifier, which is absent.

As shown by way of example in Figure 4, which regards the case N=2 and the hypothesis of start of the synchronous acquisitions in an instant START equal to 15:20:00, the primary table 20 is hence formed by:

- a column of elements (in the example shown in Figure 4, the first column) alternatively empty, in the case of rows corresponding to asynchronous acquisitions, or else, in the case of rows corresponding to synchronous acquisitions, containing slot identifiers, the latter being for example provided by a counter implemented by the processing unit 12 and incremented by one unit at each synchronous acquisition;
- a column of elements (in the example shown in Figure 4, the second column) that contain time values, for example in the corresponding form hours:minutes:seconds;

- a column of elements (in the example shown in Figure 4, the third column) that contain indications of type, for example formed alternatively by the character "C", in the case of synchronous acquisition, and by the character "R", in the case of asynchronous acquisition;
- a column of elements (in the example shown in Figure 4, the fourth column) containing the parameter values, coded in the original format; and
- N columns (in the example shown in Figure 4, the fifth and the sixth column), each containing the codes NUM-BIT that are obtained by applying corresponding coding algorithms.

It should be noted that, in Figure 4, the parameter values of the fourth column are shown, to facilitate understanding, in ASCII format, instead of in the original format. Moreover, in Figure 4, as likewise in the subsequent figures, the codes NUM-BIT supplied by the N coding algorithms are shown in hexadecimal notation. Appearing in brackets are the corresponding integer numbers NUM-INT, as generated by the corresponding coding algorithms. The theoretical number of bytes is equal to one.

In practice, it should be noted that, if we designate by s1 and s2 two slot identifiers contained in two different rows of the primary table 20 and such that s2-s1=1, the difference between the two time values contained in these two different rows is equal to the sampling period T. In addition, between the two rows of the primary table 20 corresponding to s2 and s1 there can be a number (possibly zero) of rows corresponding to asynchronous acquisitions, which have been performed between the instants START+(s1-1)*T and START+(s2-1)*T.

A particular escape value, for example formed by the binary sequence that can be expressed in hexadecimal notation as "0xFC", can moreover be stored in the columns of the primary table 20 that correspond to the N coding algorithms in the case where, for any reason, the processing unit 12 does not manage, at an instant START+s*T (with s=1, 2, ...), to acquire in a synchronous way a corresponding numeric value.

In addition to updating (block 370, Figure 3) the primary table 20, the processing unit 12 updates (block 380) the recovery file, by inserting therein, for each numeric value, the corresponding slot identifier (if present), the corresponding time value, the corresponding indication of type, and the corresponding parameter value. In this way, in the case where there occurs an interruption of the acquisition process, for example due to a supply failure at the detection unit 6, the processing unit 12 is able, at the moment when supply is restored, to recreate, on the basis of the contents of the recovery file, the primary table 20, as available prior to interruption of the acquisition process. The processing unit 12 can then start again to acquire numeric values by cooperating with the sensor apparatus 10, as well as resuming transmission of the numeric values to the control unit 2.

In greater detail, in the case where the process of acquisition of the numeric values on the part of the processing unit 12 is interrupted for a certain interval of time of interruption, upon resumption of the acquisition process the processing unit 12 recreates the primary table 20 and adds, at the instants START+pT (with p=1, 2, ...) that fall within the interruption time interval, corresponding rows. Said corresponding rows contain, in addition to the respective slot identifier (equal to p), indications of type that identify the synchronous acquisition and, in the columns corresponding to the N coding algorithms, the binary sequence that can be expressed in hexadecimal notation as "0xFC".

The recovery file can moreover be transmitted by the processing unit 12 to the control unit 2, upon request by the control unit 2 itself. The transmission can take place, for example, by setting up a so-called file-transfer-protocol (FTP) session. The control unit 2 can then use the recovery file for verifying the correctness of numeric values communicated previously by the detection unit 6.

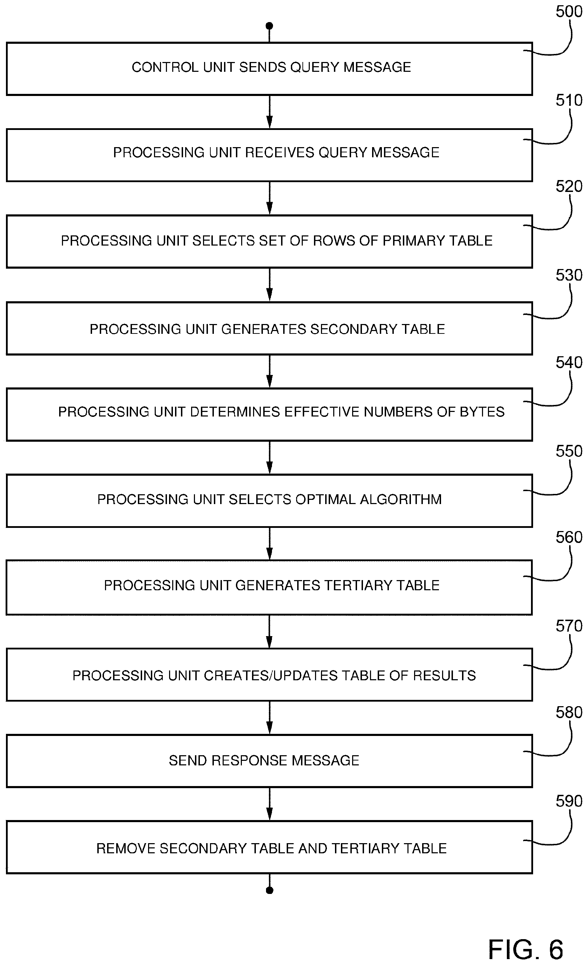

Irrespective of management of the recovery file, the processing unit 12 transmits (block 390, Figure 3) to the control unit 2 the numeric values acquired, stored in the primary table 20. For this purpose, the control unit 2 and the processing unit 12 carry out the operations shown in Figure 6.

In particular, to prompt transmission, on the part of the detection unit 6, of the numeric values acquired, the control unit 2 sends (block 500), for example periodically with a control period $T_{ctr}$, a query message to the detection unit 6 itself.

The query message contains:

- the same session identifier contained in the message of request for data collection, for identifying the data-collection session initiated by the message of request for data collection itself; and
- a last-timeslot identifier s_inf, used as described hereinafter.

For example, the first query message sent by the control unit 2 contains a last-timeslot identifier s_inf equal to zero.

The processing unit 12 receives (block 510) the query message, and then selects (block 520) a set of rows of the primary table 20. In particular, the processing unit 12 selects the rows of the primary table 20 comprised between the row having slot identifier equal to s_inf+1 (included) and the last row having as indication of type the character "C" (excluded). In practice, if we use the term "slot information k" to designate the information contained in the rows of the primary table 20 comprised between the row having slot identifier k (included) and the row having slot identifier k+1 (excluded), i.e., all the information comprised between the k-th synchronous acquisition (included) and the k+1-th synchronous acquisition (excluded), the selection involves all the slot information subsequent to the lowest slot s_inf except for the maximum-slot information. In practice, said maximum-slot information is the information corresponding to the rows of the primary table 20 having time values equal or subsequent to the time value included in the row containing a slot identifier s_max, which is the maximum slot identifier from among all the slot identifiers contained in the primary table 20. In fact, the process of acquisition of said maximum-slot information may not be yet terminated.

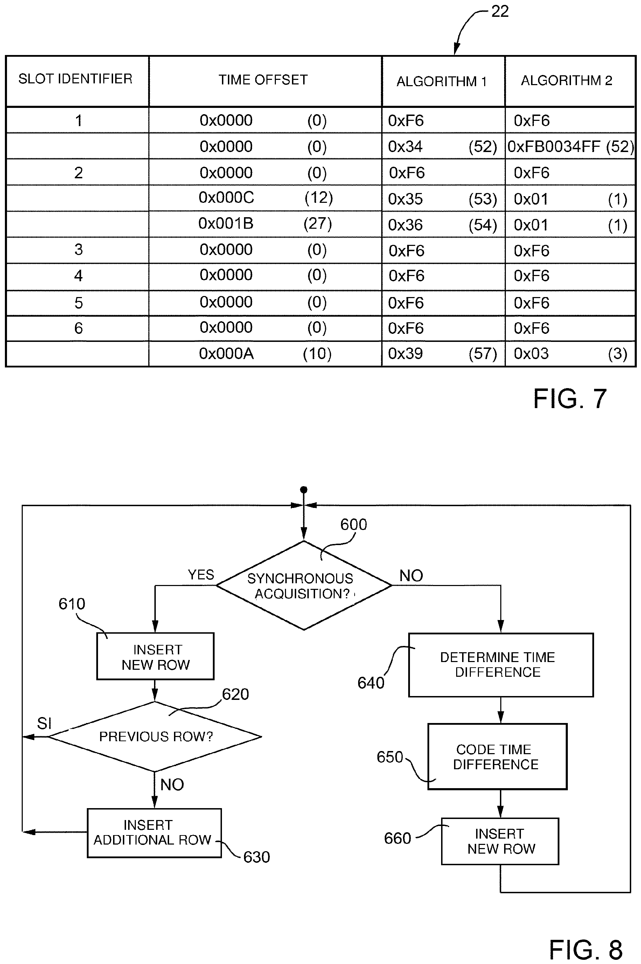

Next, the processing unit 12 generates (block 530) a secondary table 22, on the basis of the set of rows of the primary table 20 previously selected. Figure 7 shows an example of secondary table 22, corresponding to the example of primary table 20 shown in Figure 4 and to the case where the standard number of time bytes is equal to two.

The secondary table 22 is formed by N+2 columns. In detail, the secondary table 22 contains a column of elements (in the example shown in Figure 7, the first column) alternatively empty or else containing slot identifiers, a column of time offsets (in the example shown in Figure 7, the second column, described hereinafter) and N columns (in the example shown in Figure 7, the third and fourth columns), which each correspond to a respective coding algorithm. In practice, the column of time offsets defines a sequence of time offsets, whilst the N columns corresponding to the coding algorithms each define a respective code sequence.

In order to generate the secondary table 22, the processing unit 12 carries out the operations shown in Figure 8.

In detail, for each row selected during the operations of block 520, the processing unit 12 verifies (block 600) whether the row selected corresponds to an acquisition of a synchronous type or of an asynchronous type, on the basis of the corresponding indication of type.

If the row selected corresponds to an synchronous acquisition (output YES from block 600), the processing unit 12 inserts (block 610), in the secondary table 22, a new row, which contains a slot identifier equal to the slot identifier of the row selected, a zero time offset coded on the standard number of time bytes, and N escape values, corresponding for example to the binary sequence that can be expressed in hexadecimal notation as "0xF6".

Next, the processing unit 12 verifies (block 620) whether there exists in the primary table 20 a row preceding the row selected, and whether the elements of said preceding row corresponding to the N coding algorithms are equal to the corresponding elements of the selected row. If so (output YES from block 620), i.e., in the case where there exists said preceding row and this is equal, as regards the elements corresponding to the coding algorithms, to the selected row, the processing unit iterates the operations of block 600 on a new selected row of the primary table 20. Otherwise (output NO from block 620), i.e., in the case where said preceding row does not exist or is not equal to the selected row, the processing unit inserts (block 630), in the secondary table 22, an additional row without slot identifier, containing a zero time offset coded on the standard number of time bytes, and in which each element corresponding to a given coding algorithm contains the code NUM-BIT that is stored in the element of the row selected that corresponds to the given coding algorithm. Next, the processing unit 12 iterates the operations of block 600 on a new selected row of the primary table 20.

Otherwise, if the selected row corresponds to an asynchronous acquisition (output NO from block 600), the processing unit 12 determines (block 640) a time difference DIFF. In particular, if we designate by TAS1 the time value present in the selected row and with TS1 the time value present in a corresponding row of start of slot, i.e., in the row of the primary table 20 that corresponds to an synchronous acquisition and the time value TS1 of which is such that TS1<TAS1 and TAS1-TS1<T, we have DIFF=TAS1-TS.

Next, the processing unit 12 codes (block 650) the time difference DIFF on the standard number of time bytes to obtain a corresponding time offset. In practice, the standard number of time bytes determined by means of the operations of block 330 is such that it is effectively possible to code, without loss of information, any difference between the time values present in the selected row and the corresponding row of start of slot.

Next, the processing unit 12 inserts (block 660), in the secondary table 22, a new row without slot identifier, which contains the time offset obtained previously and in which each element corresponding to a given coding algorithm contains the code NUM-BIT that is stored in the element of the selected row that corresponds to the given coding algorithm.

Next, the processing unit iterates the operations of block 600 on a new selected row of the primary table 20.

It should be noted that it is possible to consider the zero time offset inserted during the operations of block 610 as obtained by coding a zero time difference DIFF. It should moreover be noted that for convenience of reading of the example of secondary table 22 shown in Figure 7, appearing in brackets in the columns corresponding to the N coding algorithms are the corresponding integer numbers NUM-INT, except in the cases where the codes NUM-BIT are equal to "0xF6". In addition, appearing in the column containing the time offsets are not just the time offsets themselves, shown in hexadecimal format; in fact, in the case of non-zero time offsets, also the corresponding time differences DIFF appear in brackets.

Once the operations of block 530 are through, the processing unit 12 determines (block 540, Figure 6), for each column of the N columns of the secondary table 22 that correspond to the N coding algorithms and the column containing the time offsets, a corresponding effective number of bytes $L_{ott}$.

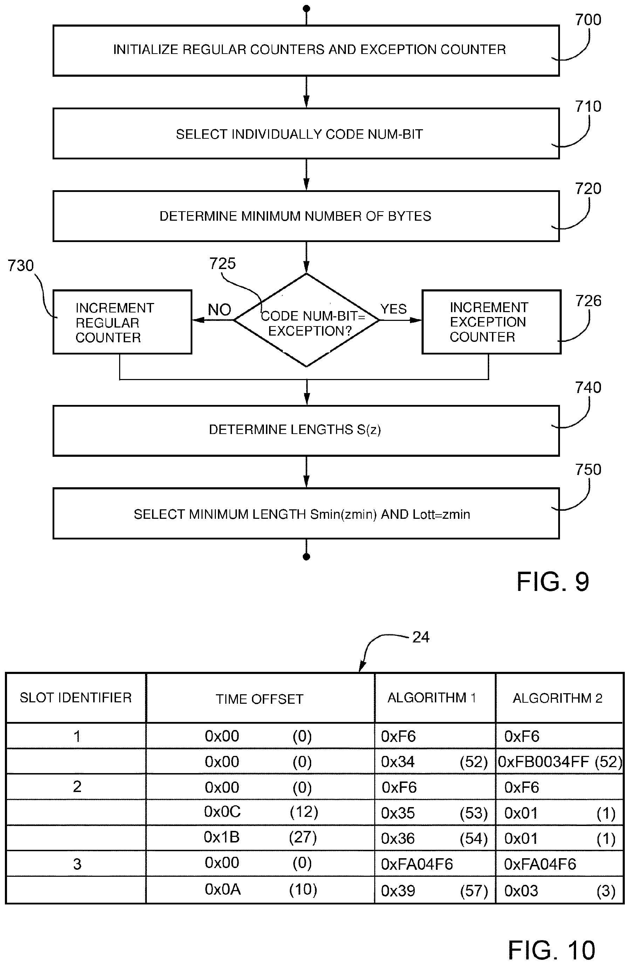

In greater detail, if the columns of the secondary table 22 that correspond to the N coding algorithms and to the column of time offsets are referred to as a whole as "columns to be optimized", and considering one column of the N+1 columns to be optimized, the processing unit 12 carries out the operations shown in Figure 9, which refer, by way of example, to the case where the column considered is one of the N columns that correspond to the N coding algorithms. The ensuing description can in any case be generalized to the case where the column considered is the column of the time offsets.

In detail, the processing unit 12 initializes (block 700) to zero a plurality of regular counters, indexed with an index j, and an exception counter. In addition, the processing unit 12 selects individually (block 710) each code NUM-BIT present in the column considered, and then determines (block 720) a corresponding minimum number of bytes Nmin, said minimum number of bytes Nmin being the minimum number of bytes sufficient for coding the integer number NUM-INT that corresponds to the code NUM-BIT selected.

In particular, in the case where the integer number NUM-INT that corresponds to the code NUM-BIT selected has generated an exception on the part of the coding algorithm that corresponds to the column considered, the minimum number of bytes Nmin is equal to the number of bytes that form said code NUM-BIT selected; i.e., it is equal to the corresponding local number of bytes. Otherwise, in the case where said integer number NUM-INT has not generated an exception, the minimum number of bytes Nmin is the minimum number of bytes sufficient for coding said integer number NUM-INT, alternatively according to the coding A or else to the coding B, depending upon whether the coding algorithm corresponding to the column considered is, respectively, of class a) or else b). In the case where the code NUM-BIT selected is equal to "0xF6", the minimum number of bytes is equal to one.

In practice, in the case where the code NUM-BIT selected does not correspond to an exception, it is possible for the corresponding minimum number of bytes Nmin to be smaller than the respective local number of bytes, and hence also than the theoretical number of bytes.

Next, the processing unit 12 verifies (block 725) whether the code NUM-BIT selected is an exception, in which case it increments (block 726) the exception counter by a number equal to the number of bytes of the exception. Otherwise, if the code NUM-BIT selected is not an exception, the processing unit increments (block 730) by one unit the regular counter indexed by the index j equal to the minimum number of bytes Nmin determined (j=Nmin).

After selecting all the codes NUM-BIT present in the column considered, the processing unit 12 has available a plurality of regular counters and the exception counter. Within a generic j-th regular counter, the number contained therein is equal to M(j) (possibly, M(j) may be equal to zero), and is equal to the number of occurrences of codes NUM-BIT that do not correspond to exceptions and the numbers minimum of bytes Nmin of which are equal to j.

Next, if jmax is the maximum index j to which a respective non-zero M(j) corresponds, the processing unit 12 determines (block 740) a number jmax of lengths S(z), indexed by an index z. In detail, the processing unit 12 calculates, for z=1, ..., jmax:

$$S(z) = \sum_{i=1}^{j\max} factor(i) \cdot M(i) + ECC$$

where ECC is the exception counter, and where factor(i)=z if i≤z≤i+2; otherwise, factor(i)=i+2.

In practice, the operations of block 740 are equivalent, for each length S(z) corresponding to a hypothetical number HYPO=z from among the minimum numbers of bytes Nmin determined previously, to selecting each code NUM-BIT of the column considered that does not correspond to an exception, and verifying whether:

CASE 1) HYPO<Nmin or else HYPO>Nmin+2;
CASE 2) Nmin≤HYPO≤Nmin+2.

Next, in CASE 1) Nmin+2 is added, whereas in CASE 2) HYPO is added. Furthermore, for each exception, the number of bytes of the code that has generated the exception itself is added.

Next, the processing unit 12 selects (block 750) the minimum length $S_{min}$(zmin) from among the lengths S(z), and hence selects also the index zmin to which there corresponds said minimum length $S_{min}$(zmin). In practice, zmin represents the aforementioned effective number of bytes $L_{ott}$, specific of the column considered, and hence of the coding algorithm considered.

As mentioned previously, the operations of blocks 700-750 are carried out also on the column of the secondary table 22 corresponding to the time offsets in order to obtain a corresponding effective number of bytes $L_{ott}$. It should be noted that, in this case, given a time offset, the corresponding minimum number of bytes Nmin is the minimum number of bytes sufficient for coding the corresponding time difference DIFF, or else the value zero (in case of zero time offset), according to the aforementioned coding A.

At the end of the operations of blocks 700-750, the processing unit 12 has available N+1 effective numbers of bytes $L_{ott}$, as well as N+1 minimum lengths $S_{min}$(zmin), of which N correspond to the N coding algorithms.

Once again with reference to Figure 6, after carrying out the operations of block 540, the processing unit 12 selects (block 550) an optimal algorithm. In particular, the optimal algorithm is the coding algorithm to which there corresponds the smallest from among the N minimum lengths $S_{min}$(zmin) corresponding to the N coding algorithms.

Next, the processing unit 12 generates (block 560) a tertiary table 24, an example of which is shown in Figure 10. In particular, in the example shown in Figure 10, the effective numbers of bytes $L_{ott}$ corresponding to the time offsets and to the first coding algorithm and to the second coding algorithm are equal to one.

In detail, the tertiary table 24 is formed by N+2 columns and is similar to the secondary table 22; hence, it contains a column of elements that alternatively are empty or else contain slot identifiers, a column of time offsets, and N columns that correspond the N coding algorithms. In practice, the column of time offsets defines a compressed sequence of time offsets, whilst the N columns corresponding to the coding algorithms each define a respective compressed code sequence.

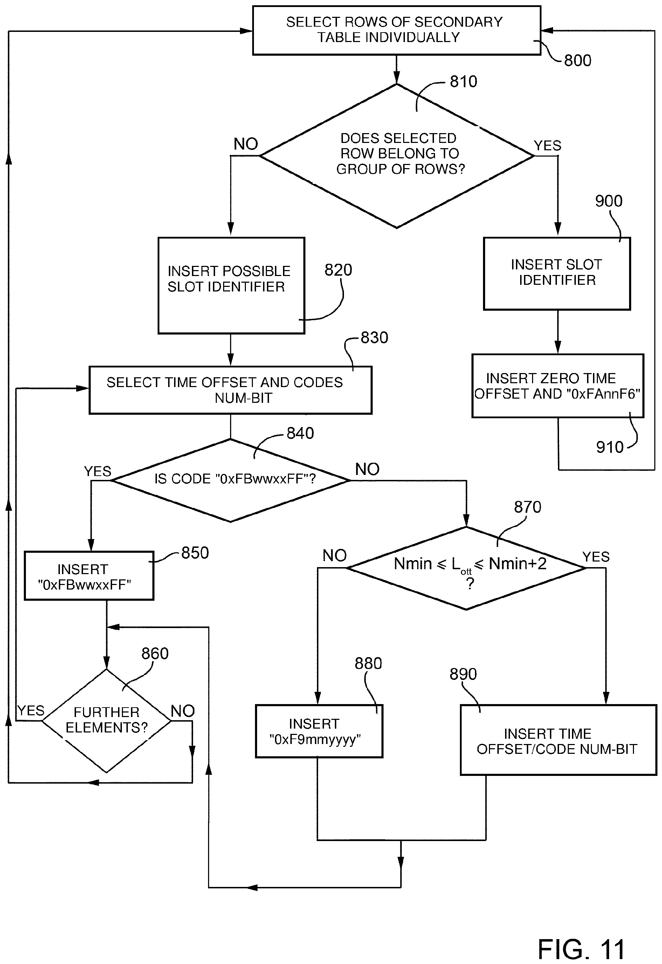

In order to generate the tertiary table 24, the processing unit 12 carries out the operations shown in Figure 11.

In detail, the processing unit 12 selects (block 800) individually each row of the secondary table 22, and verifies (block 810) whether the selected row belongs to a group of rows formed by at least four rows of the secondary table 22 set adjacent and containing, in the respective elements of the N columns that correspond to the N coding algorithms, the escape value corresponding to the binary sequence that can be expressed in hexadecimal notation as "0xF6" (they are, hence, rows corresponding to synchronous acquisitions).

In the case where the selected row of the secondary table 22 does not belong to a group of rows (output NO from block 810), the processing unit 12 inserts a new row in the tertiary table 24.

In detail, in the case where the selected row of the secondary table 22 contains a respective slot identifier, the processing unit 12 inserts (block 820), in said new row of the tertiary table 24, the slot identifier of the selected row of the secondary table 22.

Moreover, the processing unit 12 selects (block 830) individually the time offsets and the codes NUM-BIT of the selected row of the secondary table 22.

Next, the processing unit 12 verifies (block 840) whether the time offset/code NUM-BIT selected is a code NUM-BIT that corresponds to an exception, and hence is of the type "0xFBwwxxFF", or else to the escape value "0xF6", in which case (output YES from block 840) the processing unit 12 inserts (block 850) the code NUM-BIT selected in the corresponding element of the new row of the tertiary table 24. Next, the processing unit 12 verifies (block 860) whether there are other elements (time offset or codes NUM-BIT) of the selected row of the secondary table 22 to be selected, in which case (output YES from block 860) it iterates the operations of block 830; otherwise (output NO from block 860), it iterates the operations of block 800 on a subsequent row of the secondary table 22, up to exhaustion of the secondary table 22.

Otherwise, i.e., in the case where the processing unit 12 has selected a time offset or a code NUM-BIT that does not correspond to an exception nor to the escape value "0xF6" (output NO from block 840), it verifies (block 870) whether the minimum number of bytes Nmin corresponding to the time offset/code NUM-BIT selected is such that $Nmin \leq L_{ott} \leq Nmin+2$, where $L_{ott}$ is the corresponding effective number of bytes determined previously. In practice, said corresponding effective number of bytes $L_{ott}$ is the effective number of bytes $L_{ott}$ corresponding to the column to which the time offset/code NUM-BIT selected belongs.

In the case where $Nmin > L_{ott}$ or else $Nmin < L_{ott}-2$ (output NO from block 870), the processing unit 12 inserts (block 880), in the new row of the tertiary table 24, in particular in the element of the new row of the tertiary table 24 that corresponds to the time offset/code NUM-BIT selected, a binary sequence that can be expressed in hexadecimal notation as "0xF9mmyyyy". In detail, "F9" is an escape value that indicates the start of a sort of departure from the corresponding effective number of bytes $L_{ott}$; "mm" indicates (for example, according to the coding A) the minimum number of bytes Nmin corresponding to the time offset/code NUM-BIT selected; and "yyyy" is the time offset/code NUM-BIT selected, expressed on the minimum number of bytes Nmin (in this case, "mm"="0x02", because the sequence provided by way of example "yyyy" occupies two bytes).

It should be noted that by the phrase "time offset/code NUM-BIT selected, expressed on the minimum number of bytes Nmin" is understood a binary sequence obtained by coding the time difference/integer number that corresponds to the time offset/code NUM-BIT selected on the respective minimum number of bytes Nmin, according to the coding A or the coding B, depending upon whether it is a time offset or a code NUM-BIT and, in the latter case, depending upon the class of the corresponding algorithm. In practice, if we designate by TEO the standard number of time bytes/theoretical number of bytes, if TEO>Nmin, the aforementioned binary sequence "yyyy" is equal to the time offset/code NUM-BIT selected, minus a number TEO-Nmin of zero bytes, the latter being devoid of information.

Next, the processing unit 12 iterates the operations of block 860.

Otherwise, in the case where $Nmin \leq L_{ott} \leq Nmin+2$ (output YES from block 870), the processing unit 12 inserts (block 890), in the new row of the tertiary table 24 (in particular in the element of the new row of the tertiary table 24 that corresponds to the time offset/code NUM-BIT selected), the time offset/code NUM-BIT selected, expressed on the aforementioned corresponding effective number of bytes $L_{ott}$. In other words, the processing unit 12 inserts the binary sequence obtained by coding the time difference/integer number that correspond to the time offset/code NUM-BIT selected on the corresponding effective number of bytes $L_{ott}$, according to the coding A or the coding B, depending upon whether it is a time offset or a code NUM-BIT, and, in the latter case, depending upon the class of the corresponding algorithm.

Next, the processing unit 12 iterates the operations of block 860.

Alternatively, in the case where the selected row belongs to a group of rows (output YES from block 810), the processing unit 12 inserts a new row in the tertiary table 24.

In particular, the processing unit 12 inserts (block 900), in said new row of the tertiary table 24, the same slot identifier as the one present in the selected row. Moreover, the processing unit 12 inserts (block 910), in the element of the new row belonging to the column of the time offsets, a zero time offset (expressed according to the coding A, on the effective number of bytes $L_{ott}$ corresponding to the time offsets), as well as, in each element of the N columns that correspond to the N coding algorithms, the binary sequence that can be expressed in hexadecimal notation as "0xFAnnF6", where "FA" is an escape value that indicates the start of the group of rows, and "nn" indicates the number of rows (and hence of slot) present in the group of rows.

Next, the processing unit 12 iterates the operations of block 860 on the first row of the secondary table 22 subsequent to the aforementioned group of rows, up to exhaustion of the secondary table 22.

In practice, the presence of a group of rows within of the secondary table 22 indicates that, during the corresponding slots, the parameter has not varied. Consequently, the operations of blocks 800-910 enable a reduction of the traffic involved in transmitting this information. In other words, nn*T is equal to the duration of the time interval in which the parameter remains constant. The threshold corresponding to the presence of four rows is specific for the particular case in which the theoretical number of bytes is equal to one and is due to the fact that, with the codings described, the operations of blocks 800-910 enable reduction of the traffic only if each group of rows is formed by at least four rows, since the binary sequence "0xFAnnF6" entails a traffic overhead of two byte with respect to the theoretical number of bytes. Modifications with respect to the codings described can in any case be made, with consequent variations of the threshold.

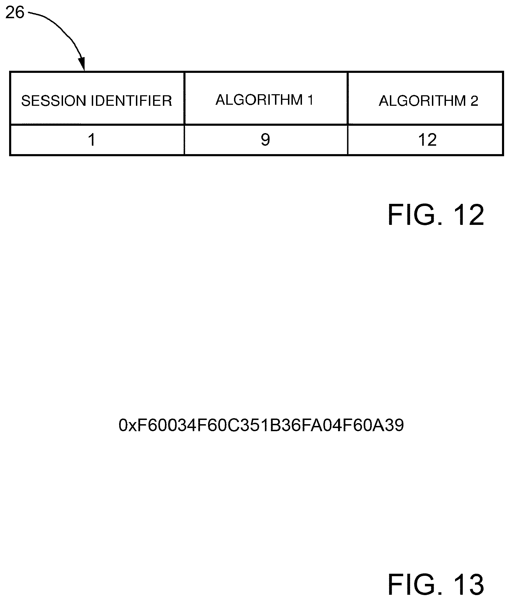

Once again with reference to the operations shown in Figure 6, the processing unit 12 creates (block 570), if absent, or else updates, if present, a table of results 26, which is formed by N+1 columns, N of which correspond to the N coding algorithms. An example of table of results 26 is shown in Figure 12.

In detail, the processing unit 12 inserts a row in the table of results 26, which contains, as first element, the session identifier contained in the message of request for data collection. In addition, each element from among the remaining N elements of the row inserted corresponds to a respective coding algorithm and contains a number equal to the overall number of bytes contained in the column of the tertiary table 24 that corresponds to said respective algorithm.

Next, the processing unit 12 sends (block 580) a message of response to the control unit 2.

The message of response contains:

- the session identifier contained in the message of request for data collection and in the query message;
- a code that identifies the optimal algorithm;
- an initial-slot identifier, equal to s_inf+1;
- a slot identifier equal to s_max-1;

- the effective number of bytes $L_{ott}$ corresponding to the optimal algorithm;
- the effective number of bytes $L_{ott}$ corresponding to the time offsets; and
- an optimized data string.

In detail, the optimized data string is formed by the processing unit 12 on the basis of the bytes present in the columns of the tertiary table 24 corresponding to the time offsets and to the optimal algorithm.

In greater detail, the processing unit 12 scans the rows of the tertiary table 24 in sequence, starting from the first row up to the last. An example of optimized data string corresponding to the tertiary table 24 shown in Figure 10 is given in Figure 13.

In the case where the row scanned contains, in the column corresponding to the optimal algorithm, the escape value "0xF6" or else a binary sequence that can be expressed in hexadecimal notation as "0xFAnnF6", the processing unit adds to the optimized data string (which is initially empty) the escape value "0xF6" or else the binary sequence that can be expressed in hexadecimal notation as "0xFAnnF6", respectively.

Instead, in the case where the row scanned does not contain, in the column corresponding to the optimal algorithm, the escape value "0xF6" nor a binary sequence that can be expressed in hexadecimal notation as "0xFAnnF6", the processing unit 12 adds to the optimized data string first the time offset of the row scanned and then the binary sequence contained in the element of the row scanned corresponding to the optimal algorithm.

Next, the processing unit 12 scans a subsequent row of the tertiary table 24, up to exhaustion of the tertiary table.

Finally, the processing unit 12 removes (block 590) the secondary table 22 and the tertiary table 24 from the volatile memory 14. The primary table 20 remains, instead, unaltered.

The operations described hence enable transmission of the numeric values acquired by the detection unit 6, using a limited number of bytes.

Upon reception of the response message, the control unit 2 is able to reconstruct the evolution in time of the parameter, applying backwards the optimal algorithm so as to obtain, starting from the codes, the corresponding integer numbers, and hence the corresponding numeric values.

In particular, the control unit 2 is able to discriminate correctly between time offsets and codes NUM-BIT, on the basis of the escape values, the effective number of bytes $L_{ott}$ corresponding to the optimal algorithm, and the effective number of bytes $L_{ott}$ corresponding to the time offsets.

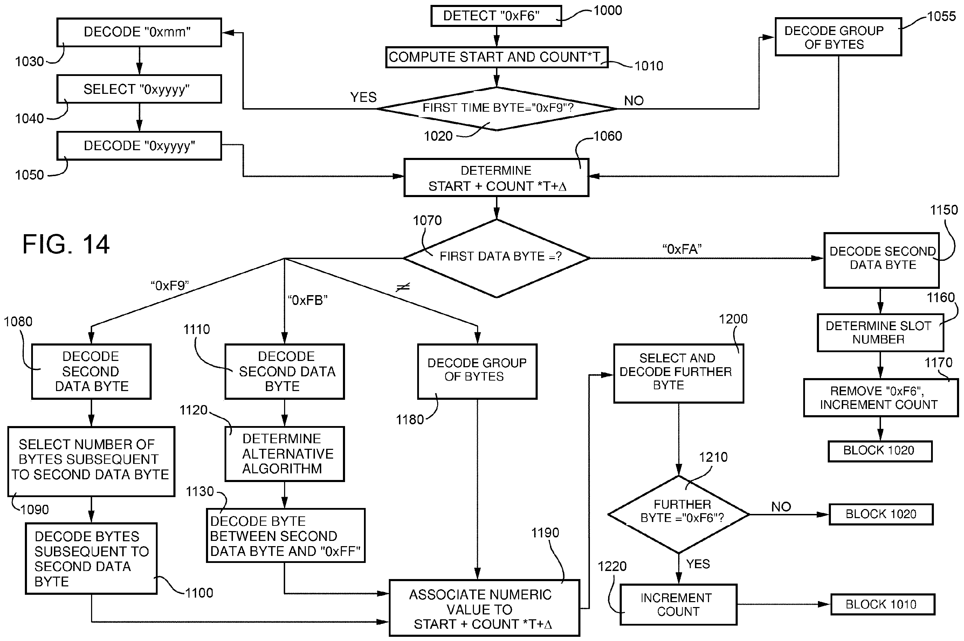

In greater detail, the optimized data string starts with a binary sequence "0xF6". The control unit 2, as shown in Figure 14, detects (block 1000) said binary sequence "0xF6" and calculates (block 1010) a slot instant equal to START+count*T, where "count" is a counter that is initially at the value zero. Next, the control unit 2 decodes and analyses (block 1020) the subsequent byte of the optimized data string.

In the case where the subsequent byte, which in what follows will be referred to as "first time byte", is the escape value "0xF9" (output YES from block 1020), it means that we are in the presence of a time offset coded as "0xF9mmyyyy", i.e., of a "departure". Hence, the control unit 2 decodes (block 1030) the byte subsequent to the first time byte ("0xmm"), which will be referred to as "second time byte", and then selects (block 1040) a number of bytes subsequent to the second time byte ("0xyyyy"), said number being indicated by the second time byte itself. The control unit 2 decodes (block 1050) said number of bytes subsequent to the second time byte to obtain a time difference, here designated by $\Delta$. Next, the control unit 2 determines (block 1060) an instant START+count*T+$\Delta$.

Otherwise, if the first time byte is different from "0xF9" (output NO from block 1020), the control unit 2 decodes (block 1055) a group of bytes including the first time byte and a number of bytes (subsequent to the first time byte) equal to the effective number of bytes $L_{ott}$ corresponding to the time offsets, decremented by one. In this way, the control unit 2 obtains a corresponding time difference $\Delta$. Next, the control unit 2 carries out the operations of block 1060.

After performing the operations of block 1060, the control unit 2 decodes and analyses (block 1070) the byte subsequent to the subsequent number of bytes "0xyyyy", which in what follows will be referred to as "first data byte", and verifies whether the first data byte is equal alternatively to "0xF9", or else to "0xFA", or else to "0xFB", or else is different from "0xF9", from "0xFA", and from "0xFB".

If the first data byte is equal to "0xF9" (output 0xF9 from block 1070), it means that we are in the presence of a code coded as "0xF9mmyyyy", i.e., of a "departure"; hence, the control unit 2 decodes (block 1080) the byte subsequent to the first data byte, which in what follows will be referred to as "second data byte", and selects (block 1090) a number of bytes subsequent to the second data byte, said number being indicated by the second data byte itself. The control unit 2 decodes (block 1100) said number of bytes subsequent to the second data byte, on the basis of the optimal algorithm to obtain the corresponding integer number and, hence, the corresponding numeric value.

If the first data byte is equal to "0xFB" (output 0xFB from block 1070), it means that we are in the presence of an exception; hence, the control unit 2 decodes (block 1110) the byte subsequent to the first data byte, in order to determine (block 1120) the alternative algorithm, and then decodes (block 1130) by means of the alternative algorithm the byte comprised between the second data byte (excluded) and the first byte equal to "0xFF" (excluded).

If the first data byte is equal to "0xFA" (output 0xFA from block 1070), it means that the parameter has remained constant for a certain time interval. Consequently, the control unit 2 decodes (block 1150) the second data byte and determines (block 1160) a slot number in which the parameter has not changed. Moreover, the control unit removes (block 1170) from the optimized data string the byte "0xF6" subsequent to the second data byte, increments "count" by a number equal to the number of slots in which the parameter has not changed, and then iterates the operations of block 1020.

If the first data byte is different from "0xF9", from "0xFA", and from "0xFB" (output # from block 1070), the control unit 2 decodes (block 1180) a group of bytes formed by the first data byte and by a number of bytes (subsequent to the first data byte) equal to the effective number of bytes $L_{ott}$ corresponding to the optimal algorithm, decremented by one. In this way, the control unit 2 obtains a corresponding numeric value.

At the end of the operations of blocks 1100, 1130 and 1180, the control unit 2 associates (block 1190) the numeric value obtained at the instant START+count*T+$\Delta$.

Next, the control unit selects and decodes (block 1200) a further byte and verifies (block 1210) whether said further byte is equal to "0xF6" .

If the further byte is equal to "0xF6" (output YES from block 1210), the control unit 2 increments (block 1220) by one unit the counter "count", and then iterates the operations of block 1010 and subsequent blocks. Otherwise, if the further byte is different from "0xF6" (output NO from block 1210), the control unit 2 iterates the operations of block 1020.

The advantages that the present method affords emerge clearly from the foregoing description. In particular, the transmission of numeric values is optimized on the basis of the coding algorithms available and of the numeric values themselves, as acquired during a certain time interval. Further reductions in the number of bytes effectively transmitted are moreover obtained on the basis of the time scan with which the numeric values are acquired, as well as possible periods of absence of acquisition.

The method described is hence suited to applications in which it is of particular importance to reduce as far as possible the number of bytes transmitted, such as for example applications of satellite control, or else applications in the field of remote control by means of conveyed waves, i.e., applications where the data are transmitted over electrical supply lines. In these cases, the detection system 1 functions as remote-reading system, in which the communication medium 4 is alternatively formed by free space, or else by electrical supply lines.

Furthermore, even though the present method has been described with particular reference to the case where a single parameter is present, it can be applied to the case where different parameters, with different dynamics and discretization steps, and hence with different theoretical numbers of bytes, are to be monitored.

Finally, it is evident that modifications and variations may be made to the present method, without thereby departing from the scope of the present invention, as defined by the annexed claims.

For example, the information contained in the primary, secondary, and tertiary tables can be organized in a way different from what has been described herein. Moreover, it is possible to store in the aforesaid tables information different from the one described; for example, it is possible to insert slot identifiers also in the rows of the primary table 20 corresponding to asynchronous acquisitions.

In addition, it is possible to apply coding algorithms that are additional to and/or different from the ones described.

It is moreover possible to execute one or more of the operations shown in Figures 2, 3, 5, 6, 8, 9, 11 and 14 in a different order from the one described. It is moreover possible for one or more of the operations shown in Figures 2, 3, 5, 6, 8, 9, 11 and 14 to be absent. In addition, it is possible, during execution of the coding algorithms, for each integer number NUM-INT, as likewise for each time difference DIFF, to be coded in a dynamic way directly on a corresponding minimum number Nmin of bytes. In this case, the operations of block 890 envisage inserting, in the new row of the tertiary table 24, exactly the time offset/code NUM-BIT selected; moreover, as regards the operations of block 880, the string "yyyy" coincides with the time offset/code NUM-BIT selected.

Once again, it is possible to apply the present method also in the case where the coding operations are performed not on bytes, but on groups of bits of any length.

Finally, the present method can be applied also to values of a non-numeric type (for example, of an alphabetic type, or else values corresponding to images or films, i.e., pixels), after prior appropriate transformation, in a way in itself known, into corresponding numeric values.

**Claims**

1. A method for transmitting numeric values from a detection unit (6) to a control unit (2), the detection unit being configured for acquiring numeric values in respective acquisition instants, in a synchronous and/or asynchronous way, and on the basis of a signal indicating a quantity to be monitored; said method comprising, for each value considered from among the numeric values acquired, performing, by said detection unit, the steps of:

    - applying (410) to said considered value at least a first coding algorithm and a second coding algorithm, so as to obtain, respectively, a first code and a second code, said first and second codes being in binary format;
    - storing (420) the first code, the second code, and the acquisition instant corresponding to the considered value;

the method further comprising performing, by said detection unit, the step of generating (530) a first code sequence and a second code sequence, associated respectively to the first coding algorithm and to the second coding algorithm and comprising, respectively, the first and second codes stored; **characterized in that** it further comprises performing, by said detection unit, the steps of:

    - selecting (550) an optimal algorithm from said at least a first coding algorithm and a second coding algorithm, on the basis of the first and second code sequences;
    - generating (560) a compressed sequence of data on the basis, alternatively, of the first code sequence or of the second code sequence, depending on the selected optimal algorithm; and
    - transmitting (390) to the control unit the compressed sequence of data.

2. The transmission method according to claim 1, further comprising carrying out, by the detection unit (6), the steps of:

    - determining a plurality of periodic sampling instants;
    - determining (640) a plurality of time differences on the basis of the stored acquisition instants and of corresponding sampling instants;
    - determining (650) a plurality of time intervals in binary format, on the basis of the time differences; and
    - generating (560) a compressed sequence of time intervals, on the basis of the determined time intervals;

and wherein said step of transmitting (390) to the control unit (2) the compressed sequence of data comprises the steps of generating a binary string on the basis of the compressed sequence of data and of the compressed sequence of time intervals, and transmitting the binary string.

3. The transmission method according to claim 2, wherein the step of selecting an optimal algorithm (550) comprises, for each sequence considered from between the first and second code sequences, the steps of:

    - for each code of the considered sequence, determining (720) a corresponding minimum number of bits sufficient for coding the corresponding acquired numeric value according to the coding algorithm that corresponds to the considered sequence;

- selecting individually each minimum number of bits from among the minimum numbers of bits determined;

- for each minimum number of bits selected individually, determining (740) a corresponding length of data relating to the considered sequence, said step of determining a corresponding length of data comprising adding, for each code considered from among the codes of the considered sequence:

a) the minimum number of bits selected individually, if said minimum number of bits selected individually is comprised between the minimum number of bits relating to the considered code and the sum of the minimum number of bits relating to the considered code and an additional number; otherwise

b) the minimum number of bits relating to the considered code plus the additional number, if the minimum number of bits relating to the considered code is greater than said minimum number of bits selected individually or else is smaller than said minimum number of bits selected individually decremented by the additional number;

and

- determining (750) a corresponding minimum length of data, said minimum length of data being the smallest from among the determined lengths of data;

said step of selecting (550) an optimal algorithm further comprising selecting the algorithm associated to the code sequence having the shortest length from among the minimum lengths of data determined for the first and second code sequences.

4. The transmission method according to claim 3, wherein the step of applying (410) to said considered value at least a first coding algorithm and a second coding algorithm comprises generating (200) a first integer number and a second integer number and coding (210) said first and second integer numbers respectively by means of a first binary coding and a second binary coding.

5. The transmission method according to claim 4, wherein said step of determining (720), for each code of the considered sequence, a corresponding minimum number of bits comprises determining the minimum number of bits sufficient for coding alternatively the first integer number or else the second integer number relating to the acquired numeric value that corresponds to said code, respectively by means of the first binary coding or else of the second binary coding, depending on whether the considered sequence is alternatively the first code sequence or else the second code sequence.

6. The transmission method according to claim 4 or claim 5, comprising the step of determining (400, 600), for each acquired numeric value, by said detection unit (6), whether the acquired numeric value has been acquired in a synchronous or asynchronous way; and wherein the step of determining (640, 650) a plurality of time intervals comprises generating (530) a first sequence of time intervals, said step of generating a first sequence of time intervals comprising, for each acquired numeric value:

- in the case where the acquired numeric value has been acquired in a synchronous way, inserting (610), in the first sequence of time intervals, a first binary time sequence corresponding to a zero time difference; otherwise

- in the case where the acquired numeric value has been acquired in an asynchronous way, computing (640) a difference between the corresponding acquisition instant and the sampling instant that is most recent with respect to said corresponding acquisition instant, coding (650) said difference in binary format, and inserting (660) the coded difference in the first sequence of time intervals;

and wherein the step of generating (530) a first code sequence and a second code sequence comprises, for each acquired numeric value:

- in the case where the acquired numeric value has been acquired in a synchronous way, inserting (610), in the first and second code sequences, a code equal to a first binary control sequence; otherwise

- in the case where the acquired numeric value has been acquired in an asynchronous way, inserting (660), in the first and second code sequences, respectively, the corresponding first code and the corresponding second code.

7. The transmission method according to claim 6, wherein the step of generating (530) a first code sequence and a second code sequence comprises, for each acquired numeric value, the steps of:

- if the acquired numeric value has been acquired in a synchronous way, verifying (620) whether there exists a previous numeric value, acquired immediately before the acquired numeric value and equal to the acquired numeric value; and

- in the case where said previous numeric value does not exist or else is different from said acquired numeric value, inserting (630), in the first and second code sequences, respectively, the first and second codes corresponding to the acquired numeric value.

8. The transmission method according to claim 6 or claim 7, wherein the step of generating (560) a compressed sequence of data comprises:

- determining (700-750) an effective number of code bits, said effective number of code bits being equal to the minimum number of bits selected individually to which there corresponds the minimum length of data relating to the code sequence associated to the optimal algorithm;
- selecting, alternatively, the first code sequence or the second code sequence, depending on the optimal algorithm selected;
- selecting (800) each code of the selected code sequence and:
- in the case where said selected code is equal to the first binary control sequence, inserting (850) the first binary control sequence in the compressed sequence of data;
- in the case where said selected code is different from the first binary control sequence, verifying (870) whether the effective number of code bits is comprised between the minimum number of bits that corresponds to the selected code and the sum of said corresponding minimum number of bits and the additional number, and:

- if the effective number of code bits is comprised between said corresponding minimum number of bits and the sum of said corresponding minimum number of bits and the additional number, determining a first version of the selected code, by coding the integer number that corresponds to the selected code according to the optimal algorithm and on said effective number of code bits, and inserting (890) said first version in the compressed sequence of data; otherwise
- if the effective number of code bits is smaller than said corresponding minimum number of bits or else is greater than the sum of said corresponding minimum number of bits and of the additional number, determining a second version of the selected code, by coding the integer number that corresponds to the selected code according to the optimal algorithm and on said corresponding minimum number of bits, and next inserting (880), in the compressed sequence of data, a second binary control sequence, a binary sequence indicating said corresponding minimum number of bits, and said second version.

9. The transmission method according to claim 8, further comprising the steps of:

- for each time interval of the first sequence of time intervals, determining (720) a corresponding lower number of bit, said lower number of bits being the minimum number of bits sufficient for coding the corresponding time difference;
- selecting individually each lower number of bits from among the lower numbers of bits determined;
- for each lower number of bits selected individually, determining (740) a corresponding length of time relating to the first sequence of time intervals, said step of determining a corresponding length of time comprising adding, for each time interval considered from among the time intervals of the first sequence of time intervals:

a) the lower number of bits selected individually, if said lower number of bits selected individually is comprised between the lower number of bits relating to the considered time interval and the sum of the lower number of bits relating to the considered time interval and the additional number; otherwise
b) the lower number of bits relating to the considered time interval plus the additional number, if the lower number of bits relating to the considered time interval is greater than said lower number of bits selected individually or else is smaller than said lower number of bits selected individually decremented by the additional number;

and
- determining (750) an effective number of time bits, equal to the lower number of bits selected individually to which there corresponds the shortest from among the determined time lengths.

10. The transmission method according to claim 9, wherein the step of generating (560) a compressed sequence of time intervals comprises the steps of:

- selecting (800) each time interval of the first sequence of time intervals and:
- if the effective number of time bits is comprised between the minimum number of bits that corresponds to the selected time interval and the sum of said corresponding lower number of bits and the additional number, determining a first variant of the selected time interval, by coding the time difference that corresponds to the selected time interval on said effective number of time bits, and inserting (890) said first variant in the compressed sequence of time intervals; otherwise

- if the effective number of time bits is smaller than said corresponding lower number of bits or else is greater than the sum of said corresponding lower number of bits and the additional number, determining a second variant of the selected time interval, by coding the time difference that corresponds to the selected time interval on said corresponding lower number of bits, and then inserting (880), in the compressed sequence of time intervals, the second binary control sequence, a binary sequence indicating said corresponding lower number of bits, and said second variant.

11. The method according to claim 10, wherein said step of generating (560) a compressed sequence of time intervals and said step of generating (560) a compressed sequence of data comprise:

- verifying (810) whether, in the code sequence associated to the optimal algorithm, sets of codes are present formed by a number of consecutive codes equal to the first binary control sequence, said number of consecutive codes being at least equal to a threshold number;
- for each set of codes, inserting (910), in the compressed sequence of data, a third binary control sequence and a binary sequence indicating the number of codes present in the set of codes.

12. The transmission method according to claim 11, further comprising the step of:

- discriminating, by the control unit (2), between first groups of bits of the binary string relating to codes and second groups of bits of the binary string relating to time intervals, on the basis of the first, second, and third binary control sequences, of the effective number of code bits, and of the effective number of time bits.

13. A detection unit configured for executing the transmission method according to any one of claims 1 to 11.

14. A sensor network comprising a control unit (2) and a detection unit (6) according to claim 13 when depending upon claim 11, the control unit being configured for discriminating between first groups of bits of the binary string relating to codes and second groups of bits of the binary string relating to time intervals, on the basis of the first, second, and third binary control sequences, of the effective number of code bits, and of the effective number of time bits.

**Patentansprüche**

1. Verfahren zum Übertragen von numerischen Werten aus einer Erfassungseinheit (6) an eine Steuereinheit (2), wobei die Erfassungseinheit konfiguriert ist, um numerische Werte bei jeweiligen Erlangungszeitpunkten auf synchrone und / oder asynchrone Weise und auf der Basis eines Signals zu erlangen, das eine zu überwachende Quantität angibt; wobei das Verfahren für jeden Wert, der unter den erlangten numerischen Werten in Betracht gezogen wird, durch die Erfassungseinheit die folgenden Schritte ausführt:

- Anwenden (410) auf den in Betracht gezogenen Wert mindestens eines ersten Codieralgorithmus und eines zweiten Codieralgorithmus, um entsprechend einen ersten Code und einen zweiten Code zu erlangen, wobei der erste und zweite Code im Binärformat sind;
- Speichern (420) des ersten Codes, des zweiten Codes und des Erlangungszeitpunkts entsprechend dem in Betracht gezogenen Wert;

wobei das Verfahren ferner Durchführen durch die Erfassungseinheit des Schritts zum Erzeugen (530) einer ersten Codesequenz und einer zweiten Codesequenz umfasst, die entsprechend dem ersten Codieralgorithmus und dem zweiten Codieralgorithmus zugeordnet sind und entsprechend den ersten und zweiten gespeicherten Code aufweisen; **dadurch gekennzeichnet, dass** es ferner Ausführen der folgenden Schritte durch die Erfassungseinheit umfasst:

- Auswählen (550) eines optimalen Algorithmus von dem mindestens einen ersten Codieralgorithmus und zweiten Codieralgorithmus auf der Basis der ersten und zweiten Codesequenz;
- Erzeugen (560) einer komprimierten Sequenz von Daten auf der Basis wahlweise der ersten Codesequenz oder der zweiten Codesequenz abhängig vom ausgewählten optimalen Algorithmus; und
- Übertragen (390) an die Steuereinheit der komprimierten Sequenz von Daten.

2. Übertragungsverfahren nach Anspruch 1, ferner **gekennzeichnet durch** Durchführen der folgenden Schritte durch die Erfassungseinheit (6):

- Bestimmen einer Vielzahl von periodischen Abtastzeitpunkten;
- Bestimmen (640) einer Vielzahl von Zeitdifferenzen auf der Basis der gespeicherten Erlangungszeitpunkte und der entsprechenden Abtastzeitpunkte;
- Bestimmen (650) einer Vielzahl von Zeitintervallen im Binärformat auf der Basis der Zeitdifferenzen; und
- Erzeugen (560) einer komprimierten Sequenz von Zeitintervallen auf der Basis der bestimmten Zeitintervalle;

wobei der Schritt des Übertragens (390) an die Steuereinheit (2) der komprimierten Sequenz von Daten die Schritte zum Erzeugen einer binären Zeichenkette auf der Basis der komprimierten Sequenz von Daten und der komprimierten Sequenz von Zeitintervallen und zum Übertragen der binären Zeichenkette umfasst.

3. Übertragungsverfahren nach Anspruch 2, **dadurch gekennzeichnet, dass** der Schritt des Auswählens eines optimalen Algorithmus (550) für jede Sequenz, die aus der ersten und der zweiten Codesequenz in Betracht gezogen wird, die folgenden Schritte umfasst:

- für jeden Code der in Betracht gezogenen Sequenz Bestimmen (720) einer entsprechenden minimalen Anzahl von Bits, die ausreicht, um den entsprechenden erlangten numerischen Wert entsprechend dem Codieralgorithmus zu codieren, der der in Betracht gezogenen Sequenz entspricht;
- individuelles Auswählen jeder minimalen Anzahl von Bits aus der bestimmten minimalen Anzahl von Bits;
- für jede individuell ausgewählte minimale Anzahl von Bits Bestimmen (740) einer entsprechenden Länge von Daten bezüglich der in Betracht gezogenen Sequenz, wobei der Schritt des Bestimmens einer entsprechenden Länge von Daten Hinzufügen für jeden Code aus den Codes der in Betracht gezogenen Sequenz von:

a) der individuell ausgewählten minimalen Anzahl von Bits, wenn die individuell ausgewählte minimale Anzahl von Bits zwischen der minimalen Anzahl von Bits bezüglich des in Betracht gezogenen Codes und der Summe der minimalen Anzahl von Bits bezüglich des in Betracht gezogenen Codes und einer zusätzlichen Anzahl beinhaltet ist; andernfalls
b) der minimalen Anzahl von Bits bezüglich des in Betracht gezogenen Codes plus der zusätzlichen Anzahl, wenn die minimale Anzahl von Bits des in Betracht gezogenen Codes größer ist als die individuell ausgewählte minimale Anzahl von Bits oder andernfalls kleiner ist als die individuell ausgewählte minimale Anzahl von Bits dekrementiert um die zusätzliche Anzahl; umfasst

und

- Bestimmen (750) einer entsprechenden minimalen Länge von Daten, wobei die minimale Länge von Daten die kleinste unter den bestimmten Längen von Daten ist;

wobei der Schritt des Auswählens (550) eines optimalen Algorithmus ferner Auswählen des Algorithmus umfasst, der der Codesequenz zugeordnet ist, die die kürzeste Länge unter den minimalen Längen von Daten aufweist, die für die erste und zweite Codesequenz bestimmt wurden.

4. Übertragungsverfahren nach Anspruch 3, **dadurch gekennzeichnet, dass** der Schritt des Anwendens (410) auf den in Betracht gezogenen Wert mindestens eines ersten Codieralgorithmus und eines zweiten Codieralgorithmus Erzeugen (200) einer ersten ganzzahligen Zahl und einer zweiten ganzzahligen Zahl und Codieren (210) der ersten ganzzahligen Zahl und der zweiten ganzzahligen Zahlen mittels einer ersten binären Codierung bzw. einer zweiten binären Codierung umfasst.

5. Übertragungsverfahren nach Anspruch 4, **dadurch gekennzeichnet, dass** der Schritt des Bestimmens (720) für jeden Code der in Betracht gezogenen Sequenz einer entsprechenden minimalen Anzahl von Bits Bestimmen der minimalen Anzahl von Bits, die zum Codieren wahlweise der ersten ganzzahligen Zahl oder andernfalls der zweiten ganzzahligen Zahl bezüglich dem erlangten numerischen Wert ausreicht, der dem Code entspricht, entsprechend mittels der ersten binären Codierung oder andernfalls der zweiten binären Codierung, abhängig davon, ob die betrachtete Sequenz wahlweise die erste Codesequenz oder andernfalls die zweite Codesequenz ist, umfasst.

6. Übertragungsverfahren nach Anspruch 4 oder 5 ferner **gekennzeichnet durch** den Schritt des Bestimmens (400, 600) für jeden erlangten numerischen Wert durch die Erfassungseinheit (6), ob der erlangte numerische Wert auf synchrone oder asynchrone Weise erlangt wurde; und wobei der Schritt des Bestimmens (640, 650) einer Vielzahl von Zeitintervallen Erzeugen (530) einer ersten Sequenz von Zeitintervallen umfasst, wobei der Schritt des Erzeugens einer ersten Sequenz von Zeitintervallen für jeden erlangten Numerischen Wert umfasst:

- in dem Fall, in dem der erlangte numerische Wert auf synchrone Weise erlangt wurde, Einfügen (610) in der ersten Sequenz von Zeitintervallen einer ersten binären Zeitsequenz entsprechend einer Null-Zeitdifferenz; andernfalls
- in dem Fall, in dem der erlangte numerische Wert auf asynchrone Weise erlangt wurde, Berechnen (640) einer Differenz zwischen dem entsprechenden Erlangungszeitpunkt und dem Abtastzeitpunkt, der in Bezug auf den entsprechenden Erlangungszeitpunkt am neuesten ist, Codieren (650) der Differenz im Binärformat und Einfügen (660) der codierten Differenz in der ersten Sequenz von Zeitintervallen;

und wobei der Schritt des Erzeugens (530) einer ersten Codesequenz und einer zweiten Codesequenz für jeden erlangten numerischen Wert umfasst:

- in dem Fall, in dem der erlangte numerische Wert auf synchrone Weise erlangt wurde, Einfügen (610) in der ersten und zweiten Codesequenz einen Code gleich einer ersten binären Steuersequenz; andernfalls
- in dem Fall, in dem der erlangte numerische Wert auf asynchrone Weise erlangt wurde, Einfügen (660) in der ersten Codesequenz und zweiten Codesequenz den entsprechenden ersten Code bzw. den entsprechenden zweiten Code.

7. Übertragungsverfahren nach Anspruch 6, **dadurch gekennzeichnet, dass** der Schritt des Erzeugens (530) einer ersten Codesequenz und einer zweiten Codesequenz für jeden erlangten numerischen Wert die folgenden Schritte umfasst:

- wenn der erlangte numerische Wert auf synchrone Weise erfasst wurde, Verifizieren (620), ob es einen vorherigen numerischen Wert gibt, der unmittelbar vor dem erlangten numerischen Wert und gleich dem erlangten numerischen Wert erlangt wurde; und
- in dem Fall, in dem der vorherige numerische Wert nicht existiert oder sich von dem erlangten numerischen Wert unterscheidet, Einfügen (630) in der ersten und zweiten Codesequenz des ersten bzw. zweiten Codes entsprechend dem erlangten numerischen Wert.

8. Übertragungsverfahren nach Anspruch 6 oder 7, **dadurch gekennzeichnet, dass** der Schritt des Erzeugens (560) einer komprimierten Sequenz von Daten umfasst:

- Bestimmen (700-750) einer effektiven Anzahl von Codebits, wobei die effektive Anzahl von Codebits gleich der minimalen Anzahl von individuell ausgewählten Bits ist, denen die minimalen Länge von Daten entspricht, die sich auf die dem optimalen Algorithmus zugeordnete Codesequenz bezieht;
- wahlweises Auswählen der ersten Codesequenz oder der zweiten Codesequenz abhängig von dem ausgewählten optimalen Algorithmus;
- Auswählen von (800) jedes Codes der ausgewählten Codesequenz und:
- in dem Fall, in dem der ausgewählte Code gleich der ersten binären Steuersequenz ist, Einfügen (850) der ersten binären Steuersequenz in der komprimierten Sequenz von Daten;
- in dem Fall, in dem sich der ausgewählte Code von der ersten binären Steuersequenz unterscheidet, Verifizieren (870), ob die effektive Anzahl von Codebits zwischen der minimalen Anzahl von Bits, die dem ausgewählten Code entspricht, und der Summe der entsprechenden minimalen Anzahl und der zusätzlichen Anzahl beinhaltet ist, und:

- wenn die effektive Anzahl von Codebits zwischen der entsprechenden minimalen Anzahl von Bits und der Summe der entsprechenden minimalen Anzahl von Bits und der zusätzlichen Anzahl beinhaltet ist, Bestimmen einer ersten Version des ausgewählten Codes durch Codieren der ganzzahligen Zahl, die dem ausgewählten Code entspricht, gemäß dem optimalen Algorithmus und auf die effektive Anzahl von Codebits und Einfügen (890) der ersten Version in der komprimierten Sequenz von Daten; andernfalls
- wenn die effektive Anzahl von Codebits kleiner als die entsprechende minimale Anzahl von Bits oder andernfalls größer als die Summe der entsprechenden minimalen Anzahl von Bits und der zusätzlichen Anzahl ist, Bestimmen einer zweiten Version des ausgewählten Codes, durch Codieren der ganzzahligen Zahl, die dem ausgewählten Code entspricht, gemäß dem optimalen Algorithmus und auf die entsprechende minimale Anzahl von Bits und als nächstes Einfügen (880) in der komprimierten Sequenz von Daten eine zweite binäre Steuersequenz, eine binäre Sequenz, die die entsprechende minimale Anzahl von Bits angibt, und die zweiten Version.

9. Übertragungsverfahren nach Anspruch 8, ferner die folgenden Schritte umfassend:

- für jedes Zeitintervall der ersten Sequenz von Zeitintervallen Bestimmen (720) einer entsprechenden niedrigeren Anzahl von Bits, wobei die niedrigere Anzahl von Bits die minimale Anzahl von Bits ist, die ausreicht, um die entsprechende Zeitdifferenz zu codieren;

- individuelles Auswählen jeder niedrigeren Anzahl von Bits aus der bestimmten niedrigeren Anzahl von Bits;

- für jede individuell ausgewählte niedrigere Anzahl von Bits Bestimmen (740) einer entsprechenden Zeitdauer bezüglich der ersten Sequenz von Zeitintervallen, wobei der Schritt des Bestimmens einer entsprechenden Zeitdauer Hinzufügen für jedes Zeitintervall, das aus den Zeitintervallen der ersten Sequenz von Zeitintervallen in Betracht gezogen wird, von:

a) der individuell ausgewählten niedrigeren Anzahl von Bits, wenn die individuell ausgewählte niedrigere Anzahl von Bits zwischen der niedrigeren Anzahl von Bits bezüglich des in Betracht gezogenen Zeitintervalls und der Summe der niedrigeren Anzahl von Bits bezüglich des in Betracht gezogenen Zeitintervalls und der zusätzlichen Anzahl beinhaltet ist; andernfalls

b) der niedrigeren Anzahl von Bits bezüglich des in Betracht gezogenen Zeitintervalls plus der zusätzlichen Anzahl, wenn die niedrigere Anzahl von Bits bezüglich des in Betracht gezogenen Zeitintervalls größer ist als die individuell ausgewählte niedrigere Anzahl von Bits oder andernfalls kleiner als die individuell ausgewählte niedrigere Anzahl von Bits dekrementiert um die zusätzliche Zahl ist; umfasst

und

- Bestimmen (750) einer effektiven Anzahl von Zeitbits gleich der individuell ausgewählten niedrigeren Anzahl von Bits, denen die kürzeste unter den bestimmten Zeitlängen entspricht.

10. Übertragungsverfahren nach Anspruch 9, **dadurch gekennzeichnet, dass** der Schritt des Erzeugens (560) einer komprimierten Sequenz von Zeitintervallen die folgenden Schritte umfasst:

- Auswählen (800) jedes Zeitintervalls der ersten Sequenz von Zeitintervallen und:

- wenn die effektive Anzahl von Zeitbits zwischen der minimalen Anzahl von Bits, die dem ausgewählten Zeitintervall entspricht, und der Summe der entsprechenden niedrigeren Anzahl von Bits und der zusätzlichen Anzahl beinhaltet ist, Bestimmen einer ersten Variante des ausgewählten Zeitintervalls durch Codieren der Zeitdifferenz, die dem ausgewählten Zeitintervall entspricht, auf der effektiven Anzahl von Zeitbits und Einfügen (890) der ersten Variante in der komprimierten Sequenz von Zeitintervallen; andernfalls

- wenn die effektive Anzahl von Zeitbits kleiner als die entsprechende niedrigere Anzahl von Bits ist oder andernfalls größer als die Summe der entsprechenden niedrigeren Anzahl von Bits und der zusätzlichen Anzahl ist, Bestimmen einer zweiten Variante des ausgewählten Zeitintervalls durch Codieren der Zeitdifferenz, die dem ausgewählten Zeitintervall entspricht auf der entsprechenden niedrigeren Anzahl von Bits und dann Einfügen (880) in der komprimierten Sequenz von Zeitintervallen die zweite binären Steuersequenz, eine binäre Sequenz, die die entsprechende niedrigere Anzahl von Bits angibt, und die zweiten Variante.

11. Verfahren nach Anspruch 10, **dadurch gekennzeichnet, dass** der Schritt des Erzeugens (560) einer komprimierten Sequenz von Zeitintervallen und der Schritt des Erzeugens (560) einer komprimierten Sequenz von Daten umfassen:

- Verifizieren (810), ob in der dem optimalen Algorithmus zugeordneten Codesequenz Sätze von Codes vorhanden sind, die durch eine Anzahl aufeinanderfolgender Codes gebildet werden, die gleich der ersten binären Steuersequenz sind, wobei die Anzahl der aufeinanderfolgenden Codes mindestens gleich einer Schwellenzahl ist;

- für jeden Satz von Codes Einfügen (910) in der komprimierten Sequenz von Daten eine dritte binäre Steuersequenz und eine binäre Sequenz, die die Anzahl der in dem Satz von Codes vorhandenen Codes angibt.

12. Übertragungsverfahren nach Anspruch 11, ferner **gekennzeichnet durch** den folgenden Schritt:

- Diskriminieren durch die Steuereinheit (2) zwischen ersten Gruppen von Bits der binären Zeichenkette bezüglich Codes und zweiten Gruppen von Bits der binären Zeichenfolge bezüglich Zeitintervallen auf der Basis der ersten, zweiten und dritten binären Steuersequenzen, der effektiven Anzahl von Codebits und der effektiven Anzahl von Zeitbits.

13. Erfassungseinheit zur Durchführung des Übertragungsverfahrens nach einem der Ansprüche 1 bis 11.

14. Sensornetzwerk mit einer Steuereinheit (2) und einer Erfassungseinheit (6) nach Anspruch 13, wenn abhängig von Anspruch 11, wobei die Steuereinheit zum Diskriminieren zwischen ersten Gruppen von Bits der binären Zeichenkette bezüglich Codes und zweiten Gruppen von Bits der binären Zeichenfolge bezüglich Zeitintervallen auf der Basis der ersten, zweiten und dritten binären Steuersequenzen, der effektiven Anzahl von Codebits und der effektiven Anzahl von Zeitbits konfiguriert ist.

**Revendications**

1. Procédé de transmission de valeurs numériques d'une unité de détection (6) à une unité de commande (2), l'unité de détection étant configurée pour acquérir des valeurs numériques à des instants d'acquisition respectifs, de manière synchrone et/ou asynchrone, et sur la base d'un signal indiquant une quantité à surveiller; ledit procédé comprenant, pour chaque valeur considérée parmi les valeurs numériques acquises, la réalisation, par ladite unité de détection, des étapes de :

    - application (410) à ladite valeur considérée d'au moins un premier algorithme de codage et un second algorithme de codage, de façon à obtenir, respectivement, un premier code et un second code, lesdits premier et second codes étant en format binaire ;
    - stockage (420) du premier code, du second code, et de l'instant d'acquisition correspondant à la valeur considérée ;

    le procédé comprenant en outre la réalisation, par ladite unité de détection, de l'étape de génération (530) d'une première séquence de codes et d'une seconde séquence de codes, associées respectivement au premier algorithme de codage et au second algorithme de codage et comprenant, respectivement, les premier et second codes stockés ;
    **caractérisé en ce qu'**il comprend en outre la réalisation, par ladite unité de détection, des étapes de :

    - sélection (550) d'un algorithme optimal à partir dudit au moins un premier algorithme de codage et un second algorithme de codage, sur la base des première et seconde séquences de code ;
    - génération (560) d'une séquence compressée de données sur la base, alternativement, de la première séquence de codes ou de la seconde séquence de codes, selon l'algorithme optimal sélectionné ; et
    - la transmission (390) à l'unité de commande de la séquence compressée de données.

2. Procédé de transmission selon la revendication 1, comprenant en outre l'exécution, par l'unité de détection (6), des étapes de :

    - détermination d'une pluralité d'instants d'échantillonnage périodiques ;

    - détermination (640) d'une pluralité de différences de temps sur la base des instants d'acquisition stockés et d'instants d'échantillonnage correspondants ;
    - détermination (650) d'une pluralité d'intervalles de temps en format binaire, sur la base des différences de temps ; et
    - génération (560) d'une séquence compressée d'intervalles de temps, sur la base des intervalles de temps déterminés ;

    et dans lequel ladite étape de transmission (390) à l'unité de commande (2) de la séquence compressée de données comprend les étapes de génération d'une chaîne binaire sur la base de la séquence compressée de données et de la séquence compressée d'intervalles de temps, et de transmission de la chaîne binaire.

3. Procédé de transmission selon la revendication 2, dans lequel l'étape de sélection d'un algorithme optimal (550) comprend, pour chaque séquence considérée entre les première et seconde séquences de code, les étapes de :

    - pour chaque code de la séquence considérée, détermination (720) d'un nombre minimal correspondant de bits suffisant pour coder la valeur numérique acquise correspondante selon l'algorithme de codage qui correspond à la séquence considérée ;
    - sélection individuelle de chaque nombre minimal de bits parmi les nombres minimaux de bits déterminés ;
    - pour chaque nombre minimal de bits sélectionné individuellement, détermination (740) d'une longueur de données correspondante relative à la séquence considérée, ladite étape de détermination d'une longueur de données correspondante comprenant l'addition, pour chaque code considéré parmi les codes de la séquence considérée :

        a) du nombre minimal de bits sélectionné individuellement, si ledit nombre minimal de bits sélectionné individuellement est compris entre le nombre minimal de bits relatif au code considéré et la somme du nombre minimal de bits relatif au code considéré et d'un nombre supplémentaire ; sinon
        b) du nombre minimal de bits relatif au code considéré plus le nombre supplémentaire, si le nombre minimal de bits relatif au code considéré est supérieur audit nombre minimal de bits sélectionné individuellement ou bien est plus petit que ledit nombre minimal de bits sélectionné individuellement décrémenté du nombre supplémentaire ; et

- détermination (750) d'une longueur de données minimale correspondante, ladite longueur de données minimale étant la plus petite parmi les longueurs de données déterminées ;

ladite étape de sélection (550) d'un algorithme optimal comprenant en outre la sélection de l'algorithme associé à la séquence de codes ayant la longueur la plus courte parmi les longueurs de données minimales déterminées pour les première et seconde séquences de code.

4. Procédé de transmission selon la revendication 3, dans lequel l'étape d'application (410) à ladite valeur considérée d'au moins un premier algorithme de codage et un second algorithme de codage comprend la génération (200) d'un premier nombre entier et d'un second nombre entier et le codage (210) desdits premier et second nombres entiers respectivement au moyen d'un premier codage binaire et d'un second codage binaire.

5. Procédé de transmission selon la revendication 4, dans lequel ladite étape de détermination (720), pour chaque code de la séquence considérée, d'un nombre minimal correspondant de bits comprend la détermination du nombre minimal de bits suffisant pour coder alternativement le premier nombre entier ou bien le second nombre entier relatif à la valeur numérique acquise qui correspond audit code, respectivement au moyen du premier codage binaire ou bien du second codage binaire, selon que la séquence considérée est alternativement la première séquence de codes ou bien la seconde séquence de codes.

6. Procédé de transmission selon la revendication 4 ou la revendication 5, comprenant l'étape de détermination (400, 600), pour chaque valeur numérique acquise, par ladite unité de détection (6), permettant de savoir si la valeur numérique acquise a été acquise de manière synchrone ou asynchrone ; et dans lequel l'étape de détermination (640, 650) d'une pluralité d'intervalles de temps comprend la génération (530) d'une première séquence d'intervalles de temps, ladite étape de génération d'une première séquence d'intervalles de temps comprenant, pour chaque valeur numérique acquise :

- dans le cas où la valeur numérique acquise a été acquise de manière synchrone, l'insertion (610), dans la première séquence d'intervalles de temps, d'une première séquence de temps binaire correspondant à une différence de temps nulle ; sinon
- dans le cas où la valeur numérique acquise a été acquise de manière asynchrone, le calcul (640) d'une différence entre l'instant d'acquisition correspondant et l'instant d'échantillonnage qui est le plus récent par rapport à l'instant d'acquisition correspondant, le codage (650) de ladite différence en format binaire, et l'insertion (660) de la différence codée dans la première séquence d'intervalles de temps ;

et dans lequel l'étape de génération (530) d'une première séquence de codes et d'une seconde séquence de codes comprend, pour chaque valeur numérique acquise :

- dans le cas où la valeur numérique acquise a été acquise de manière synchrone, l'insertion (610), dans les première et seconde séquences de code, d'un code égal à une première séquence de commande binaire ; sinon
- dans le cas où la valeur numérique acquise a été acquise de manière asynchrone, l'insertion (660) dans les première et seconde séquences de code, respectivement, du premier code correspondant et du second code correspondant.

7. Procédé de transmission selon la revendication 6, dans lequel l'étape de génération (530) d'une première séquence de codes et d'une seconde séquence de codes comprend, pour chaque valeur numérique acquise, les étapes de :

- si la valeur numérique acquise a été acquise de manière synchrone, vérification (620) permettant de savoir s'il existe une valeur numérique précédente, acquise immédiatement avant la valeur numérique acquise et égale à la valeur numérique acquise ; et
- dans le cas où ladite valeur numérique précédente n'existe pas ou bien est différente de ladite valeur numérique acquise, insertion (630), dans les première et seconde séquences de code, respectivement, des premier et second codes correspondant à la valeur numérique acquise.

8. Procédé de transmission selon la revendication 6 ou la revendication 7, dans lequel l'étape de génération (560) d'une séquence compressée de données comprend :

- la détermination (700 à 750) d'un nombre effectif de bits de code, ledit nombre effectif de bits de code étant égal au nombre minimal de bits sélectionné individuellement auquel correspond la longueur de données minimale relative à la séquence de codes associée à l'algorithme optimal ;
- la sélection, alternativement, de la première séquence de codes ou de la seconde séquence de codes, selon l'algorithme optimal sélectionné ;

- la sélection (800), de chaque code de la séquence de codes sélectionnée et :
- dans le cas où ledit code sélectionné est égal à la première séquence de commande binaire, l'insertion (850) de la première séquence de commande binaire dans la séquence compressée de données;
- dans le cas où ledit code sélectionné est différent de la première séquence de commande binaire, la vérification (870) permettant de savoir si le nombre effectif de bits de code est compris entre le nombre minimal de bits qui correspond au code sélectionné et la somme dudit nombre minimal correspondant de bits et du nombre supplémentaire, et :

    - si le nombre effectif de bits de code est compris entre ledit nombre minimal correspondant de bits et la somme dudit nombre minimal correspondant de bits et du nombre supplémentaire, la détermination d'une première version du code sélectionné, en codant le nombre entier qui correspond au code sélectionné selon l'algorithme optimal et ledit nombre effectif de bits de code, et l'insertion (890) de ladite première version dans la séquence compressée de données; sinon

    - si le nombre effectif de bits de code est plus petit que ledit nombre minimal correspondant de bits ou bien est plus grand que la somme dudit nombre minimal correspondant de bits et du nombre supplémentaire, la détermination d'une seconde version du code sélectionné, en codant le nombre entier qui correspond au code sélectionné selon l'algorithme optimal et ledit nombre minimal correspondant de bits, puis l'insertion (880), dans la séquence compressée de données, d'une deuxième séquence de commande binaire, d'une séquence binaire indiquant ledit nombre minimal correspondant de bits, et de ladite seconde version.

**9.** Procédé de transmission selon la revendication 8, comprenant en outre les étapes de :

    - pour chaque intervalle de temps de la première séquence d'intervalles de temps, détermination (720) d'un nombre inférieur correspondant de bits, ledit nombre inférieur de bits étant le nombre minimal de bits suffisant pour coder la différence de temps correspondante ;
    - sélection individuelle de chaque nombre inférieur de bits parmi les nombres inférieurs de bits déterminés ;
    - pour chaque nombre inférieur de bits sélectionné individuellement, détermination (740) d'une longueur de temps correspondante relative à la première séquence d'intervalles de temps, ladite étape de détermination d'une longueur de temps correspondante comprenant l'addition, pour chaque intervalle de temps considéré parmi les intervalles de temps de la première séquence d'intervalles de temps :

    a) du nombre inférieur de bits sélectionné individuellement, si ledit nombre inférieur de bits sélectionné individuellement est compris entre le nombre inférieur de bits relatif à l'intervalle de temps considéré et la somme du nombre inférieur de bits relatif à l'intervalle de temps considéré et du nombre supplémentaire ; sinon
    b) du nombre inférieur de bits relatif à l'intervalle de temps considéré plus le nombre supplémentaire, si le nombre inférieur de bits relatif à l'intervalle de temps considéré est supérieur audit nombre inférieur de bits sélectionné individuellement ou bien est plus petit que ledit nombre inférieur de bits sélectionné individuellement décrémenté du nombre supplémentaire ; et

- détermination (750) d'un nombre effectif de bits de temps, égal au nombre inférieur de bits sélectionné individuellement auquel correspond la longueur la plus courte parmi les longueurs de temps déterminées.

**10.** Procédé de transmission selon la revendication 9, dans lequel l'étape de génération (560) d'une séquence compressée d'intervalles de temps comprend les étapes de :

    - sélection (800) de chaque intervalle de temps de la première séquence d'intervalles de temps et :
    - si le nombre effectif de bits de temps est compris entre le nombre minimal de bits qui correspond à l'intervalle de temps sélectionné et la somme dudit nombre inférieur correspondant de bits et du nombre supplémentaire, détermination d'une première variante de l'intervalle de temps sélectionné, en codant la différence de temps qui correspond à l'intervalle de temps sélectionné sur ledit nombre effectif de bits de temps, et insertion (890) de ladite première variante dans la séquence compressée d'intervalles de temps ; sinon
    - si le nombre effectif de bits de temps est plus petit que ledit nombre inférieur correspondant de bits ou bien est plus grand que la somme dudit nombre inférieur correspondant de bits et du nombre supplémentaire, détermination d'une seconde variante de l'intervalle de temps sélectionné, en codant la différence de temps qui correspond à l'intervalle de temps sélectionné sur ledit nombre inférieur correspondant de bits, puis insertion (880), dans la séquence compressée d'intervalles de temps, de la deuxième séquence de commande binaire, d'une séquence binaire indiquant ledit nombre inférieur correspondant de bits, et de ladite seconde variante.

11. Procédé selon la revendication 10, dans lequel ladite étape de génération (560) d'une séquence compressée d'intervalles de temps et ladite étape de génération (560) d'une séquence compressée de données comprennent :

- la vérification (810) permettant de savoir, dans la séquence de codes associée à l'algorithme optimal, si des ensembles de codes sont présents formés par un nombre de codes consécutifs égal à la première séquence de commande binaire, ledit nombre de codes consécutifs étant au moins égal à un nombre seuil ;
- pour chaque ensemble de codes, l'insertion (910), dans la séquence de données compressée, d'une troisième séquence de commande binaire et d'une séquence binaire indiquant le nombre de codes présents dans l'ensemble de codes.

12. Procédé de transmission selon la revendication 11, comprenant en outre l'étape de :

- différenciation, par l'unité de commande (2), entre des premiers groupes de bits de la chaîne binaire relative à des codes et des seconds groupes de bits de la chaîne binaire relative à des intervalles de temps, sur la base des première, deuxième et troisième séquences de commande binaire, du nombre effectif de bits de code, et du nombre effectif de bits de temps.

13. Unité de détection configurée pour exécuter le procédé de transmission selon l'une quelconque des revendications 1 à 11.

14. Réseau de capteurs comprenant une unité de commande (2) et une unité de détection (6) selon la revendication 13 lorsqu'elle dépend de la revendication 11, l'unité de commande étant configurée pour différencier entre des premiers groupes de bits de la chaîne binaire relative à des codes et des seconds groupes de bits de la chaîne binaire relative à des intervalles de temps, sur la base des première, deuxième et troisième séquences de commande binaire, le nombre effectif de bits de code, et le nombre effectif de bits de temps.

FIG. 1

FIG. 2

EP 2 442 585 B1

300

PROCESSING UNIT SETS THEORETICAL NUMBER OF BYTES

310

CONTROL UNIT SENDS MESSAGE OF REQUEST FOR DATA COLLECTION

320

PROCESSING UNIT CREATES RECOVERY FILE AND STORES MESSAGE OF REQUEST FOR DATA COLLECTION

330

PROCESSING UNIT DETERMINES STANDARD NUMBER OF TIME BYTES

340

PROCESSING UNIT DETERMINES POSSIBLE START OF DATA COLLECTION

350

PROCESSING UNIT CREATES PRIMARY TABLE

360

PROCESSING UNIT ACQUIRES NUMERIC VALUES

370

PROCESSING UNIT UPDATES PRIMARY TABLE

380

PROCESSING UNIT UPDATES RECOVERY FILE

390

PROCESSING UNIT TRANSMITS NUMERIC VALUES ACQUIRED TO CONTROL UNIT

FIG. 3

| SLOT IDENTIFIER | TIME VALUE | TYPE | PARAMETER | ALGORITHM 1 | ALGORITHM 2 |
|---|---|---|---|---|---|
| 1 | 15:20.00 | C | 5.2 | 0x34 (52) | 0xFB0034FF (52) |
| 2 | 15:21.00 | C | 5.2 | 0x34 (52) | 0x00 (0) |
| | 15:21.12 | R | 5.3 | 0x35 (53) | 0x01 (1) |
| | 15:21.27 | R | 5.4 | 0x36 (54) | 0x01 (1) |
| 3 | 15:22.00 | C | 5.4 | 0x36 (54) | 0x00 (0) |
| 4 | 15:23.00 | C | 5.4 | 0x36 (54) | 0x00 (0) |
| 5 | 15:24.00 | C | 5.4 | 0x36 (54) | 0x00 (0) |
| 6 | 15:25.00 | C | 5.4 | 0x36 (54) | 0x00 (0) |
| | 15:25.10 | R | 5.7 | 0x39 (57) | 0x03 (3) |

20

## FIG. 4

400

DETERMINE TYPE OF ACQUISITION

410

APPLY N CODING ALGORITHMS

420

INSERT NEW ROW IN PRIMARY TABLE

## FIG. 5

FIG. 6

22

| SLOT IDENTIFIER | TIME OFFSET | | ALGORITHM 1 | | ALGORITHM 2 | |
|---|---|---|---|---|---|---|
| 1 | 0x0000 | (0) | 0xF6 | | 0xF6 | |
| | 0x0000 | (0) | 0x34 | (52) | 0xFB0034FF | (52) |
| 2 | 0x0000 | (0) | 0xF6 | | 0xF6 | |
| | 0x000C | (12) | 0x35 | (53) | 0x01 | (1) |
| | 0x001B | (27) | 0x36 | (54) | 0x01 | (1) |
| 3 | 0x0000 | (0) | 0xF6 | | 0xF6 | |
| 4 | 0x0000 | (0) | 0xF6 | | 0xF6 | |
| 5 | 0x0000 | (0) | 0xF6 | | 0xF6 | |
| 6 | 0x0000 | (0) | 0xF6 | | 0xF6 | |
| | 0x000A | (10) | 0x39 | (57) | 0x03 | (3) |

FIG. 7

FIG. 8

INITIALIZE REGULAR COUNTERS AND EXCEPTION COUNTER  700

SELECT INDIVIDUALLY CODE NUM-BIT  710

DETERMINE MINIMUM NUMBER OF BYTES  720

730  INCREMENT REGULAR COUNTER

NO  725 CODE NUM-BIT= EXCEPTION?  YES

INCREMENT EXCEPTION COUNTER  726

DETERMINE LENGTHS S(z)  740

SELECT MINIMUM LENGTH Smin(zmin) AND Lott=zmin  750

FIG. 9

24

| SLOT IDENTIFIER | TIME OFFSET | | ALGORITHM 1 | | ALGORITHM 2 | |
|---|---|---|---|---|---|---|
| 1 | 0x00 | (0) | 0xF6 | | 0xF6 | |
| | 0x00 | (0) | 0x34 | (52) | 0xFB0034FF | (52) |
| 2 | 0x00 | (0) | 0xF6 | | 0xF6 | |
| | 0x0C | (12) | 0x35 | (53) | 0x01 | (1) |
| | 0x1B | (27) | 0x36 | (54) | 0x01 | (1) |
| 3 | 0x00 | (0) | 0xFA04F6 | | 0xFA04F6 | |
| | 0x0A | (10) | 0x39 | (57) | 0x03 | (3) |

FIG. 10

FIG. 11

26

| SESSION IDENTIFIER | ALGORITHM 1 | ALGORITHM 2 |
|:---:|:---:|:---:|
| 1 | 9 | 12 |

FIG. 12

0xF60034F60C351B36FA04F60A39

FIG. 13

**FIG. 14**

DETECT "0xF6" — 1000

COMPUTE START AND COUNT*T — 1010

FIRST TIME BYTE="0xF9"? — 1020

YES → DECODE "0xmm" — 1030 → SELECT "0xyyyy" — 1040 → DECODE "0xyyyy" — 1050

NO → DECODE GROUP OF BYTES — 1055

DETERMINE START + COUNT *T+Δ — 1060

FIRST DATA BYTE =? — 1070

"0xFA" → DECODE SECOND DATA BYTE — 1150 → DETERMINE SLOT NUMBER — 1160 → REMOVE "0xF6", INCREMENT COUNT — 1170 → BLOCK 1020

"0xF9" → DECODE SECOND DATA BYTE — 1080 → SELECT NUMBER OF BYTES SUBSEQUENT TO SECOND DATA BYTE — 1090 → DECODE BYTES SUBSEQUENT TO SECOND DATA BYTE — 1100

"0xFB" → DECODE SECOND DATA BYTE — 1110 → DETERMINE ALTERNATIVE ALGORITHM — 1120 → DECODE BYTE BETWEEN SECOND DATA BYTE AND "0xFF" — 1130

≠ → DECODE GROUP OF BYTES — 1180

ASSOCIATE NUMERIC VALUE TO START + COUNT *T+Δ — 1190

SELECT AND DECODE FURTHER BYTE — 1200

FURTHER BYTE ="0xF6"? — 1210

NO → BLOCK 1020

YES → INCREMENT COUNT — 1220 → BLOCK 1010

EP 2 442 585 B1

**EP 2 442 585 B1**

**Patent documents cited in the description**

- US 6487695 B